# EUROPEAN PATENT APPLICATION

(11) **EP 2 693 741 A1**
(43) Date of publication of application: **05.02.2014**
(21) Application number: 12763626.4
(22) Date of filing: 23.02.2012
(51) Int. Cl.: H04N 5/374, H04N 9/07

(54) **SOLID-STATE IMAGE CAPTURING ELEMENT, DRIVE METHOD THEREFOR, AND IMAGE CAPTURING DEVICE**

(30) Priority: 31.03.2011 JP 2011079258
(71) Applicant: FUJIFILM Corporation, Tokyo 106-8620 (JP)
(72) Inventor: OKIGAWA, Mitsuru, Saitama-shi, Saitama 331-9624 (JP); KAWAI, Tomoyuki, Saitama-shi, Saitama 331-9624 (JP); IWASAKI, Youichi, Saitama-shi, Saitama 331-9624 (JP); ODA, Kazuya, Saitama-shi, Saitama 331-9624 (JP)
(74) Representative: HOFFMANN EITLE
(86) International application number: PCT/JP2012/054392
(87) International publication number: WO 2012/132670

(57) **Abstract**

In a solid-state imaging element having a phase difference AF function and a monocular 3D imaging function, a signal of each pixel is read out appropriately.

A pixel pair (25) includes a first pixel readout transistor (40), a second pixel readout transistor (41), an electric charge accumulator (42), a reset transistor (43), an amplifier transistor (44), and a row selection transistor (45). The first pixel readout transistor (40) reads out signal charge of a first pixel (21). The second pixel readout transistor (41) reads out signal charge of a second pixel (22). The electric charge accumulator (42) temporarily accumulates the signal charge read out from each pixel. The reset transistor (43) resets the electric charge accumulator (42). The amplifier transistor (44) converts the signal charge accumulated in the electric charge accumulator (42) into signal voltage, and outputs the signal voltage. The row selection transistor (45) selects a row from which the signal voltage is to be transferred to vertical signal lines (50).

## Description

### TECHNICAL FIELD

The present invention relates to a solid-state imaging element having a phase difference AF function and a monocular 3D imaging function, a driving method thereof, and an imaging device having the solid-state imaging element.

### BACKGROUND ART

There are known digital cameras and the like that perform a phase difference type autofocus (hereinafter called phase difference AF) using a solid-state imaging element for imaging an object. The phase difference AF is a method in which a displacement amount between an image formed by first pixels selecting a right direction and an image formed by second pixels selecting a left direction is calculated, and a defocus amount of an imaging optical system is obtained from this displacement amount.

As the solid-state imaging element having the phase difference AF function, there is known one that has an arrangement of a plurality of first and second pixels (hereinafter called phase difference detection pixels) in an imaging surface in a predetermined pattern (refer to patent documents 1 to 3). The first and second pixels have selectivity between left and right with respect to an angle of light incident upon a light receiving surface of a photodiode (PD) by deflecting the center of an opening of a light shielding film disposed above the PD from an optical axis of a microlens for condensing the light to the PD.

In general, obtaining a parallax image requires two imaging sections disposed in parallel with each other. In contrast to this, it has been researched to obtain a pair of images having binocular parallax using one imaging section, by disposing pairs of the first and second pixels in the entire imaging surface of the solid-state imaging element (so called monocular 3D imaging). This solid-state imaging element having the monocular 3D imaging function allows obtaining a parallax image with only one imaging section, and hence brings about significant cost reduction of the imaging device. In recent years, 3D related technologies are in the limelight, and the practical use of the imaging device that can perform the monocular 3D imaging is demanded at the earliest possible time.

### PRIOR ART DOCUMENTS

### Patent Documents

PATENT DOCUMENT 1: Japanese Patent Laid-Open Publication No. 2007-158692
PATENT DOCUMENT 2: Japanese Patent Laid-Open Publication No. 2010-093619
PATENT DOCUMENT 3: Japanese Patent Laid-Open Publication No. 2010-252277

### SUMMARY OF THE INVENTION

### Problems to be Solved by the Invention

However, under the present state, as to the solid-state imaging element having the monocular 3D imaging function, there is considered no concrete embodiment of how to read signals obtained by the phase difference detection pixels to the outside.

The present invention aims to provide a solid-state imaging element having the phase difference AF function and the monocular 3D imaging function from which a signal obtained by each phase difference detection pixel is appropriately read out, a driving method thereof, and an imaging device.

### Means for Solving the Problems

To achieve the above object, a solid-state imaging element according to the present invention includes an imaging section; a first pixel readout section, a second pixel readout section, an electric charge accumulator, a reset section, an amplifier, and a row selection section, which are provided in each pixel pair; a plurality of vertical signal lines; a horizontal signal line; a column selection section; a plurality of first pixel readout line signal supply lines; a plurality of second pixel readout line signal supply lines; a plurality of reset lines; and a plurality of row selection lines. The imaging section includes a plurality of pixel pairs, each has first and second pixels disposed next to each other in a horizontal direction for converting incident light into electric charge for signal accumulation and a microlens for condensing light to the first and second pixels. In the imaging section, a plurality of pixel rows, each of which is composed of a plurality of the pixel pairs arranged in the horizontal direction, are arranged in a vertical direction such that the first pixel and the second pixel are next to each other in the vertical direction. The first pixel readout section reads out signal charge accumulated in the first pixel. The second pixel readout section reads out signal charge accumulated in the second pixel. The electric charge accumulator temporarily accumulates the signal charge read out from the first pixel and the second pixel. The reset section resets the signal charge accumulated in the electric charge accumulator to predetermined electric potential. The amplifier amplifies the signal charge accumulated in the electric charge accumulator and outputs the signal charge as a signal voltage. The row selection section selects one or more of the pixel rows from which the signal voltage is to be transferred. The plurality of vertical signal lines are formed along the vertical direction and provided every predetermined number of columns in the vertical direction, for transferring the signal voltage from the row selected by the row selection section in the vertical direction. The horizontal signal line transfers the signal voltage from each of the vertical signal lines in the horizontal direction. The column selection section is provided so as to correspond to each of the vertical signal lines, for selecting one or more of the columns in which the signal voltage is to be transferred from each of the vertical signal lines to the horizontal signal line. The plurality of first pixel readout line signal supply lines supplies to each of the first pixel readout sections a first pixel readout signal for reading out the signal charge from the first pixel. The plurality of second pixel readout line signal supply lines supplies to each of the second pixel readout sections a second pixel readout signal for reading out the signal charge from the second pixel. The plurality of reset lines supplies to each of the reset sections a reset signal for resetting the electric charge accumulator to the predetermined electric potential. The plurality of row selection lines supplies a row selection signal to each of the row selection sections.

The first pixel readout line signal supply lines and the second pixel readout line signal supply lines are alternately disposed in the vertical direction between the pixel rows adjoining in the vertical direction so as to be shared between two of the pixel rows adjoining in the vertical direction.

The pixel pair has one color filter for transmitting only light of a predetermined color out of the light condensed by the microlens. The color filter is one of a red color filter for transmitting red light, a green color filter for transmitting green light, and a blue color filter for transmitting blue light. A filter set is constituted of two green color filters disposed adjacently in the vertical direction and one red color filter and one blue color filter adjoining to the two green color filters and disposed adjacently in the horizontal direction. The filter sets are arranged adjacently each other in the horizontal direction and the vertical direction.

Each of the vertical signal lines is provided at every column of each of the pixel pairs arranged in the vertical direction.

Alternatively, a first filter set is constituted of two green color filters disposed adjacently in a 45-degree diagonal direction and two red color filters adjoining to the green color filters and disposed adjacently each other in the 45-degree diagonal direction. A second filter set is constructed by substituting a blue color filter for each of the red color filters of the first filter set. The color filter may be made of the first and second filter sets arranged in a checkered pattern. In this case, one vertical signal line is preferably provided at every two columns of the pixel pairs. Outputs of a pair of the pixel pairs that adjoin in the 45-degree diagonal direction and have the color filters of the same color are preferably connected to the single vertical signal line.

An opening area of a light shielding film over a photoelectric converter is in such a shape as not to extend out of an outline of the microlens.

The microlens may have a semi-elliptical spherical shape having a major axis of substantially a same length as a width of the pixel pair in the horizontal direction, and an optical axis of the microlens may substantially coincide with the center of the pixel pair. In this case, the pixel pair preferably transmits only light of a predetermined color out of the light condensed by the microlens, and preferably has a color filter of a substantially hexagonal shape circumscribing a bottom surface of the microlens.

Also, a driving method of a solid-state imaging element according to the present invention is a driving method of the solid-state imaging element that includes an imaging section; a first pixel readout section, a second pixel readout section, an electric charge accumulator, a reset section, an amplifier, and a row selection section, which are provided in each pixel pair; a plurality of vertical signal lines; a horizontal signal line; a column selection section; a plurality of first pixel readout line signal supply lines; a plurality of second pixel readout line signal supply lines; a plurality of reset lines; and a plurality of row selection lines. This driving method has an A step of making an exposure of the imaging section, a B step of reading out the signal voltage, and a C step of reading out the signal voltage of one screen by repeating the A to B steps from a first row to a last row. In the B step, the signal voltage of the first and second pixels of one row of an N-th row (N is an arbitrary integer) is read out, by inputting the row selection signal to the row selection line of the N-th row of the imaging section, inputting the first pixel readout signal to the first pixel readout line signal supply line of the N-th row of the imaging section, inputting the second pixel readout signal to the second pixel readout line signal supply line of the N-th row of the imaging section, and sequentially transferring the signal voltage corresponding to the N-th row read out to each of the vertical signal lines to the horizontal signal line.

It is preferable that exposure time differs between the first pixel and the second pixel, by shifting input timing of the first pixel readout signal to the first pixel readout line signal supply line and input timing of the second pixel readout signal to the second pixel readout line signal supply line when making the exposure.

The exposure time may be substantially equalized between the first pixel and the second pixel, by simultaneously inputting the first pixel readout signal to the first pixel readout line signal supply line and the second pixel readout signal to the second pixel readout line signal supply line when making the exposure.

When performing readout of the N-th row, the signal charge after the exposure accumulated in each of the first pixels of the N-th row is read out by inputting the first pixel readout signal to the first pixel readout line signal supply line of the N-th row. After the readout of the signal charge, the signal charge after the exposure accumulated in each of the second pixels of the N-th row is preferably read out by inputting the second pixel readout signal to the second pixel readout line signal supply line of the N-th row.

When performing readout of the N-th row, the first pixel readout signal is inputted to the first pixel readout line signal supply line. Together with this, the second pixel readout signal is simultaneously inputted to the second pixel readout line signal supply line. By reading out the signal charge accumulated in the first pixel and the signal charge accumulated in the second pixel at the same time, the signal charge may be mixed in the electric charge accumulator.

The first and second filter sets may be arranged in a checkered pattern, and long exposure time and short exposure time may be assigned alternately to every other pixel row in the vertical direction. One of a pair of the pixel pairs adjoining in the 45-degree diagonal direction is intended for high sensitivity and the other is intended for low sensitivity by performing the mixture of the signal charge in the electric charge accumulator in readout of the one row.

When performing readout of the N-th row, the signal charge accumulated in each of the first pixels of a plurality of the pixel pairs adjoining in the vertical direction may be mixed in the vertical signal line by inputting the first pixel readout signal simultaneously to the first pixel readout line signal supply lines of a plurality of rows including adjoining rows. Together with this, the signal charge accumulated in each of the second pixels of a plurality of the pixel pairs adjoining in the vertical direction may be mixed in the vertical signal line by inputting the second pixel readout signal simultaneously to the second pixel readout line signal supply lines of a plurality of rows.

Also, an imaging device according to the present invention includes the solid-state imaging element and a drive control section for driving the solid-state imaging element. The drive control section has a first drive mode in which exposure time differs between the first pixel and the second pixel, by shifting input timing of the first pixel readout signal to the first pixel readout line signal supply line and input timing of the second pixel readout signal to the second pixel readout line signal supply line, when making an exposure of the imaging section.

There is preferably provided a second drive mode in which exposure time is substantially equalized between the first pixel and the second pixel. In this case, the drive control section inputs the first pixel readout signal to the first pixel readout line signal supply line, when making an exposure of the imaging section. Together with this, the second pixel readout signal is simultaneously inputted to the second pixel readout line signal supply line.

When reading out the signal voltage accumulated in the first and second pixels of an N-th row (N is an arbitrary integer), the drive control section reads out the signal charge after an exposure accumulated in each of the first pixels of the N-th row by inputting the first pixel readout signal to the first pixel readout line signal supply line of the N-th row. After that, the signal charge after the exposure accumulated in each of the second pixels of the N-th row is preferably read out by inputting the second pixel readout signal to the second pixel readout line signal supply line of the N-th row.

There is preferably provided a third drive mode in which the signal charge is mixed in the electric charge accumulator. In this case, when reading out the signal charge accumulated in the first and second pixels, the first pixel readout signal is inputted to the first pixel readout line signal supply line. Together with this, the second pixel readout signal is simultaneously inputted to the second pixel readout line signal supply line, so that the signal charge accumulated in the first pixel and the signal charge accumulated in the second pixel are simultaneously read out to the electric charge accumulator.

The first and second filter sets may be arranged in a checkered pattern, and the drive control section may assign long exposure time and short exposure time to every other pixel row alternately in the vertical direction. One of a pair of the pixel pairs adjoining in the 45-degree diagonal direction is intended for high sensitivity and the other is intended for low sensitivity by adopting the mode of mixing the signal charge in the electric charge accumulator in readout of the one row.

When reading out the signal charge accumulated in the first and second pixels, the drive control section inputs the first pixel readout signal simultaneously to a plurality of the first pixel readout line signal supply lines. Thus, the signal charge accumulated in each of the first pixels of the plurality of the pixel pairs adjoining in the vertical direction is mixed in the vertical signal line. Also, by inputting the second pixel readout signal simultaneously to a plurality of the second pixel readout line signal supply lines, the signal charge accumulated in each of the second pixels of a plurality of the pixel pairs adjoining in the vertical direction is preferably mixed in the vertical signal line.

### Effect of the Invention

In the present invention, together with performing input of the row selection signal to the row selection line, input of the first pixel readout signal to the first pixel readout line signal supply line, and input of the second pixel readout signal to the second pixel readout line signal supply line, each column selection section of each of the vertical signal lines corresponding to the rows is actuated to sequentially transfer the signal voltage read out to each vertical signal line to the horizontal signal line. This reads out the signal voltage of each pixel of one arbitrary row. By repeating the readout of the row from the first row to the last row, the signal voltage of one screen is read out. Thus, according to the present invention, in the solid-state imaging element having the phase difference AF function and the monocular 3D imaging function using the first and second pixels, being phase difference detection pixels, it is possible to appropriately read out a signal obtained by each pixel.

### BRIEF DESCRIPTION OF DRAWINGS

Fig. 1 is a block diagram showing the structure of an imaging device;
Fig. 2 is an explanatory view showing the structure of an imaging surface;
Fig. 3 is an explanatory view showing an arrangement of color filters;
Fig. 4 is a schematic circuit diagram showing the structure of a CMOS image sensor;
Fig. 5 is a timing chart showing operation procedure in a high dynamic range still image mode;
Fig. 6 is a timing chart showing operation procedure in the case of performing mixing of signal charge in vertical signal lines;
Fig. 7 is a timing chart showing operation procedure in a left and right simultaneous exposure still image mode;
Fig. 8 is a timing chart showing operation procedure in a left and right pixels mixing still image mode;
Fig. 9 is a timing chart showing operation procedure in a 2D moving image mode;
Fig. 10 is a timing chart showing operation procedure in a 3D moving image mode;
Fig. 11 is an explanatory view showing an EXR array color filter;
Fig. 12 is a schematic circuit diagram showing the structure of a CMOS image sensor having the EXR array color filter;
Fig. 13 is an explanatory view showing an example of structure in which an opening area of a light shielding film of a PD does not extend out of the outline of a microlens;
Fig. 14 is an explanatory view showing an example in which one edge of the opening area of the light shielding film of the PD is brought near to the center of the microlens;
Fig. 15 is an explanatory view showing an example of a square microlens; and
Fig. 16 is an explanatory view showing an example of microlenses in the form of a half oval sphere.

### DESCRIPTION OF INVENTION

### [First Embodiment]

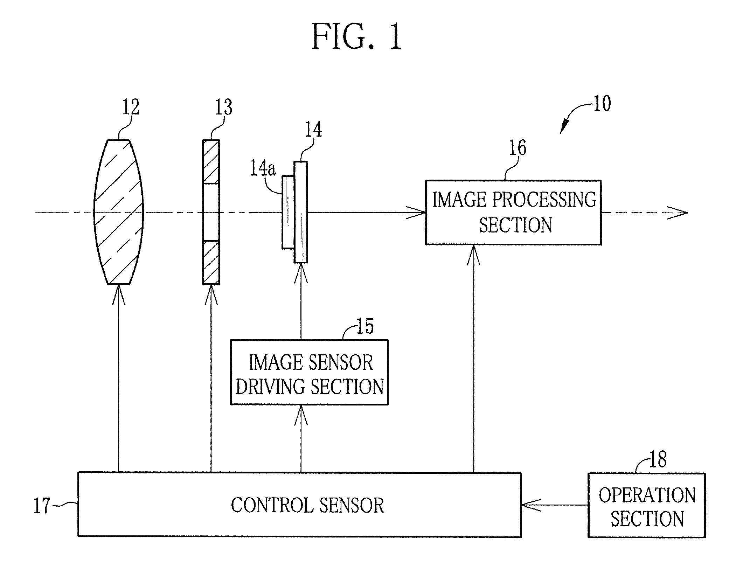

In Fig. 1, an imaging device 10 is provided with a taking lens 12, a mechanical shutter 13, a CMOS image sensor (solid-state imaging element) 14, an image sensor driving section 15, an image processing section 16, a control section 17, and an operation section 18. This imaging device 10 is, for example, a digital camera, a cellular phone having a camera function, or the like. Note that, the image sensor driving section 15, the image processing section 16, and the CMOS image sensor 14 may be formed in a common single semiconductor chip.

The taking lens 12 forms an object image in an imaging surface (imaging section) 14a of the CMOS image sensor 14. The taking lens 12 contains a focus lens and an aberration correction lens (neither is shown) to perform focus adjustment, image distortion correction, and color correction.

The mechanical shutter 13 has a movable section (not shown) that shifts between a closed position for blocking incidence of the object image upon the imaging surface 14a and an open position for allowing the incidence of the object image upon the imaging surface 14a. The shift of the movable section to each position opens or closes an optical path leading from the taking lens 12 to the CMOS image sensor 14. The movable section of the mechanical shutter 13 is generally in the closed position in order to prevent unnecessary light from entering into the CMOS image sensor 14. The movable section of the mechanical shutter 13 is shifted from the closed position to the open position in response to a command from the control section 17, so that the CMOS image sensor 14 can capture the object image. Note that, the imaging device 10 includes an aperture stop (not shown) for controlling a light amount entering the CMOS image sensor 14.

The CMOS image sensor 14 captures the object image formed by the taking lens 12, and outputs an imaging signal. The image sensor driving section 15 inputs various types of signals to the CMOS image sensor 14 to drive the CMOS image sensor 14.

The image processing section 16 produces image data in a predetermined format by applying various types of image processing to the imaging signal outputted from the CMOS image sensor 14. This image data is outputted to a display device such as a liquid crystal display or the like, or outputted to an external device through an interface such as a connector, a cable, and the like, or stored to an internal memory of the imaging device 10 such as a flash memory, a hard disk, or the like, or stored to an external recording medium such as a memory card or the like loaded into a media slot.

The control section 17 is electrically connected to each portion of the taking lens 12, the mechanical shutter 13, the image sensor driving section 15, and the image processing section 16, and has centralized control over these portions. Focusing of the taking lens 12, opening and closing the mechanical shutter 13, driving of the CMOS image sensor 14 by the image sensor driving section 15, and production of the image data by the image processing section 16 are performed under control of the control section 17.

To the control section 17, the operation section 18 from which a user inputs an operation command to the imaging device 10 is electrically connected. The operation section 18 is provided with various types of input members such as a release button for commanding image capture, a select button for selecting an operation mode of the CMOS image sensor 14, and the like, to input the operation command to the imaging device 10. The operation section 18 inputs a consequence of operation of the input members to the control section 17 as the operation command. The control section 17 controls each portion in response to the operation command inputted from the operation section 18 by the user.

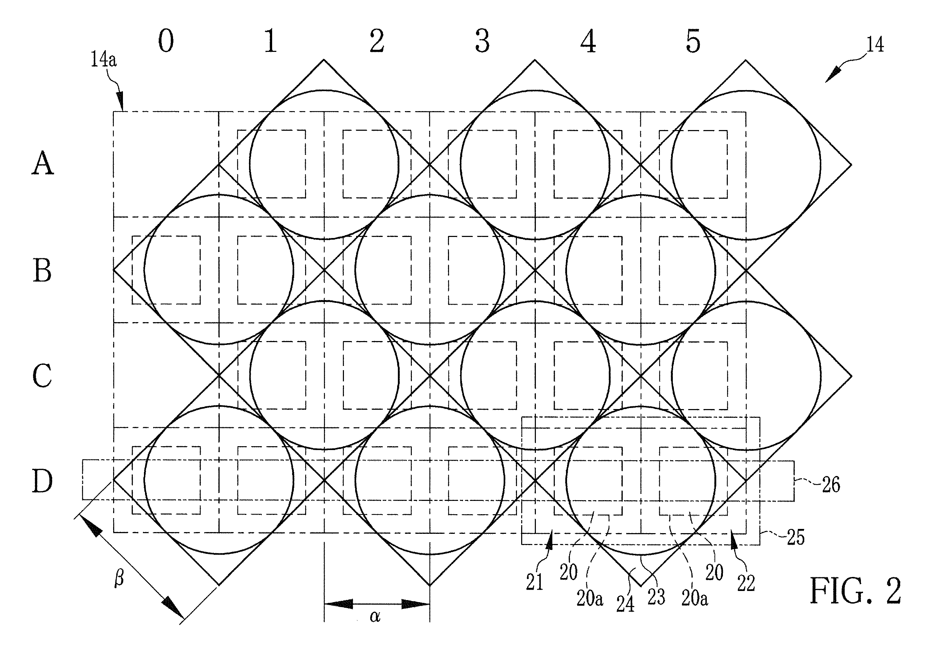

In Fig. 2, the CMOS image sensor 14 is provided with a plurality of pixel pairs 25 each of which is composed of first and second pixels 21 and 22, a microlens 23, and a color filter 24. The first and second pixels 21 and 22 are arranged so as to adjoin each other in a horizontal direction. Each of the first and second pixels 21 and 22 has a photodiode (PD) 20 being a photoelectric converter, which converts incident light into electric charge and accumulates the electric charge. A surface of the PD 20 is exposed through an opening area 20a of a light shielding film provided thereon.

One microlens 23 is provided for every pair of the first and second pixels 21 and 22, and condenses light into the middle of the first and second pixels 21 and 22. Out of the light condensed by the microlens 23, the color filter 24 transmits only light of a predetermined color (wavelength) into the first and second pixels 21 and 22.

The first and second pixels 21 and 22, each being square in form and approximately the same size, are disposed such that their sides adj oin each other by translational symmetry operation at an arrangement pitch of α in horizontal and vertical directions. The microlens 23 is formed approximately in the form of a hemisphere, and is disposed such that its optical axis is positioned in the middle of the first and second pixels 21 and 22, that is, at the midpoint of the sides on which the first and second pixels 21 and 22 adjoin each other. It can be regarded that this microlens 23 has such structure that conventional microlenses (an optical axis of the microlens approximately coincides with the center of the opening area 20a of the light shielding film of the PD 20, and a diameter of the microlens does not exceed an area of a corresponding pixel) are brought near to each other by α/2, and two of the microlenses are combined and scaled up.

The color filters 24, each being in the form of a square rotated approximately 45 degrees, are disposed such that the center of each color filter 24 coincides with the optical axis of the microlens 23, and by translational symmetry operation at an arrangement pitch of 2^{1/2}α in directions of approximately 45 degrees and approximately 135 degrees with respect to the right in the horizontal direction. The microlens 23 is formed to be an inscribed circle of the color filter 24. The microlens 23 and the color filter 24 are the largest possible size arrangeable on the pixel pair 25.

The length β of one side of the color filter 24 is 2^{1/2}α, and the size of the color filter 24 is 2α². In other words, the color filter 24 is twice as large as the first or second pixel 21, 22. The length β of one side of the color filter 24 is equal to the diameter of the microlens 23. Accordingly, the size of a circumscribe circle (a circle having a diameter of β) of the microlens 23 is πα²/2. Since the size of a circumscribed circle of the conventional microlens having a diameter of α is πα²/4, the circumscribed circle of the microlens 23 is twice as large as the circumscribed circle of the conventional microlens.

In the CMOS image sensor 14, arranging a plurality of pixel pairs 25 in the horizontal direction composes a pixel row 26. A plurality of pixel rows 26 are arranged in a direction (vertical direction) approximately perpendicular to a row direction of each pixel pair 25, and the adjoining pixel rows 26 are out of phase with each other in the horizontal direction by one pixel so that neither the first pixels 21 nor the second pixels 22 adjoin each other in the adjoining pixel rows 26. Fig. 2 simply shows the imaging surface 14a having four rows and six columns composed of twelve pixel pairs 25, but in actual fact, the square imaging surface 14a is composed of a more number of pixel pairs 25.

By composing the imaging surface 14a like this, the first and second pixels 21 and 22 are arranged into a simple tetragonal lattice so as to adjoin each other in the horizontal direction and the vertical direction, and the microlenses 23 and the color filters 24 are arranged so as to adjoin in a 45-degree diagonal direction, just as in the case of arranging pixels into so-called honeycomb structure. Here, the horizontal direction is synonymous with a left and right direction (width direction) of the imaging surface 14a formed into a square, and the vertical direction is synonymous with an up and down direction (length direction) of the imaging surface 14a. The 45-degree diagonal direction is a direction slanting by 45 degrees with respect to the left and right direction and the up and down direction of the imaging surface 14a.

In the above structure of the imaging surface 14a, the pixel rows 26 adjoining in the vertical direction are arranged out of phase in the horizontal direction by one pixel, so part of the microlens 23 extends out of each pixel pair 25 and gets into the middle between the two microlenses 23 of the adjoining pixel row 26. Also, part of the color filter 24 extends out of each pixel pair 25 and gets into the middle between the two color filters 24 of the adjoining pixel row 26. Accordingly, the first and second pixels 21 and 22 are arranged in the horizontal direction and the vertical direction without leaving space, and the microlenses 23 and the color filters 24 are arranged in the 45-degree diagonal direction without leaving space.

The first and second pixels 21 and 22 are phase difference detection pixels, which have selectivity in an angle of light incident thereon. For example, in a case where the opening area 20a of the light shielding film of the PD 20 is in the vicinity of a focal point of the microlens 23, light that enters the microlens 23 from a left direction is hardly incident on the first pixel 21, so the first pixel 21 has selectivity in light entering the microlens 23 from a right direction. On the other hand, the light that enters the microlens 23 from the right direction is hardly incident on the second pixel 22, so the second pixel 22 has selectivity in the light entering the microlens 23 from the left direction. Note that, when a focal length of the microlens 23 is longer than the distance between the microlens 23 and the PD 20, the left and right relation is reversed.

Accordingly, in the imaging device 10, a displacement occurs in the left and right direction between an image produced by the imaging signal of the first pixel 21 and an image produced by the imaging signal of the second pixel 22 in accordance with the state of focusing of the imaging lens 12. By detecting an amount and a direction of this displacement, a focus adjustment amount of the taking lens 12 can be obtained.

As described above, the CMOS image sensor 14 enables a phase difference type AF. Moreover, the CMOS image sensor 14 also enables obtainment of a parallax image having binocular parallax, that is, so-called monocular 3D imaging. Since an outline circle of the microlens 23 has an area twice the size of an outline circle of a conventional microlens, the CMOS image sensor 14 has high sensitivity as compared with a conventional phase difference detection pixel in which an opening of a light shielding film is eccentric and reduced in size due to the eccentricity and the like.

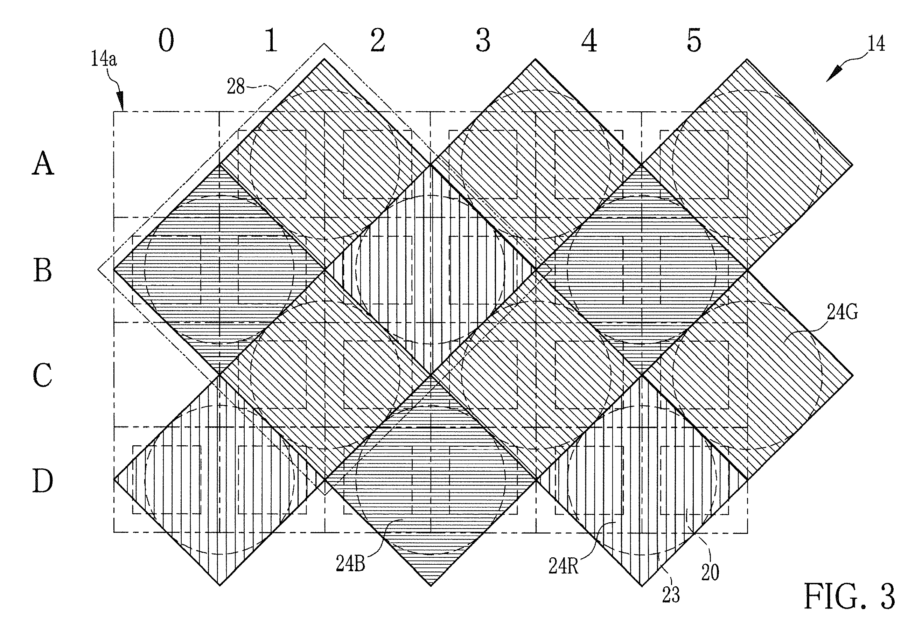

In Fig. 3, the color filters 24 are grouped into a red color filter 24R for transmitting red light, a green color filter 24G for transmitting green light, and a blue color filter 24B for transmitting blue light. One of the three color filters 24R, 24G, and 24B is provided in each pixel pair 25, and the three color filters 24R, 24G, and 24B are arranged in the imaging surface 14a in a predetermined pattern. Note that, in the drawing, vertical hatching represents red. Diagonal hatching represents green. Horizontal hatching represents blue.

A single filter set 28 is composed of two green color filters 24G adjacently disposed in the vertical direction, one red color filter 24R disposed next to the green color filters 24G right by 45 degrees, and one blue color filter 24B disposed next to the green color filters 24G left by 45 degrees. The filter sets 28 are arranged without leaving space.

According to such arrangement of the color filters 24R, 24G, and 24B, columns each having the green color filters 24G aligned in the vertical direction and columns each having the red color filters 24R and the blue color filters 24B alternately aligned in the vertical direction are disposed alternately in the horizontal direction. Also, rows each having the green color filters 24G aligned in the horizontal direction and rows each having the red color filters 24R and the blue color filters 24B alternately aligned in the horizontal direction are disposed alternately in the vertical direction. Furthermore, the positional relation between the red color filter 24R and the blue color filter 24B is opposite between the columns or the rows next to each other having the alternately aligned red color filters 24R and the blue color filters 24B. This arrangement of the color filters 24 is the same as conventional color filter arrangement in the case of an array of pixels in honeycomb arrangement.

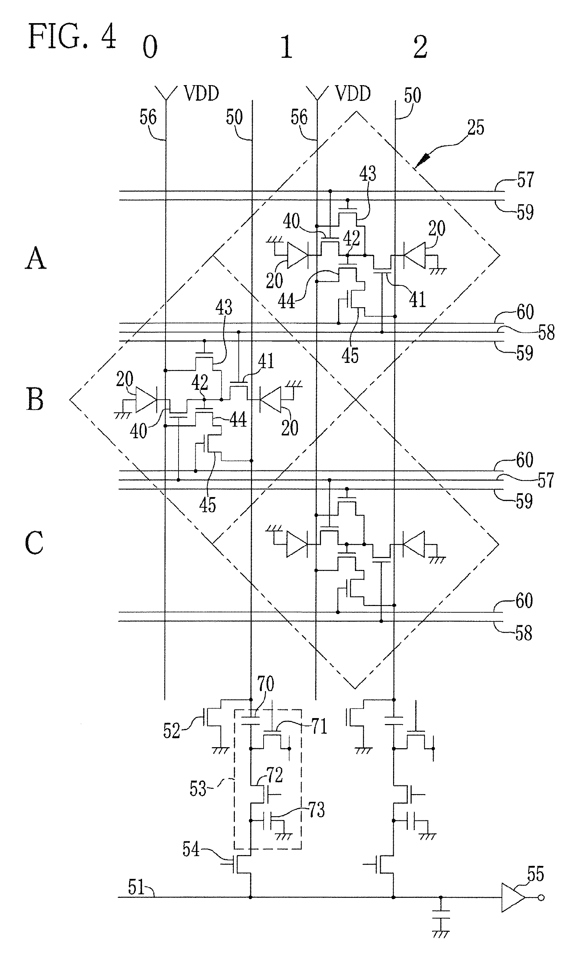

In Fig. 4, the pixel pair 25 is constituted of a first pixel readout transistor 40, a second pixel readout transistor 41, a floating diffusion (FD) 42, a reset transistor 43, an amplifier transistor 44, and a row selection transistor 45, in addition to the PDs 20 each provided in the first and second pixels 21 and 22.

The first pixel readout transistor 40 reads out signal charge accumulated in the PD 20 of the first pixel 21. The second pixel readout transistor 41 reads out signal charge accumulated in the PD 20 of the second pixel 22. The FD 42 temporarily accumulates the signal charge read out from the PD 20 of the first pixel 21 and the PD 20 of the second pixel 22. The reset transistor 43 resets the FD 42 accumulating the signal charge to predetermined electric potential. The amplifier transistor 44 amplifiers and outputs the signal charge accumulated in the FD 42 as a signal voltage. The row selection transistor 45 transfers the signal voltage to a vertical signal line 50.

The CMOS image sensor 14 is constituted of a plurality of the vertical signal lines 50, a horizontal signal line 51, load transistors 52, correlated double sampling (CDS) circuits 53, column selection transistors 54, an output amplifier 55, power supply lines 56, first pixel readout line signal supply lines 57, second pixel readout line signal supply lines 58, reset lines 59, and row selection lines 60.

The plurality of vertical signal lines 50 transfer the signal voltage of the first and second pixels 21 and 22 in the vertical direction. The horizontal signal line 51 transfers in the horizontal direction the signal voltage transferred through the vertical signal lines 50. The load transistor 52, which is connected to each vertical signal line 50, composes a source follower circuit together with the amplifier transistor 44. The CDS circuit 53 reduces fixed pattern noise of each pixel included in the signal voltage read out to the vertical signal line 50. The column selection transistor 54 is provided in each and every vertical signal line 50 to select the column from which the signal voltage is to be transferred to the horizontal signal line 51. The output amplifier 55 performs impedance conversion of the signal voltage sequentially supplied through the horizontal signal line 51, and outputs the signal voltage as an imaging signal to the outside. The power supply line 56 supplies the first and second pixels 21 and 22 with power voltage VDD. The first pixel readout line signal supply line 57 inputs a first pixel readout signal to the first pixel readout transistors 40. The second pixel readout line signal supply line 58 inputs a second pixel readout signal to the second pixel readout transistors 41. The reset line 59 inputs a reset signal to the reset transistors 43. The row selection line 60 inputs a row selection signal to the row selection transistors 45.

The vertical signal line 50 formed along the vertical direction is provided in every column of the pixel pairs 25, in such a manner that one vertical signal line 50 is provided in the column having the green color filters 24G aligned in the vertical direction, and another one vertical signal line 50 is provided in the column having the red color filters 24R and the blue color filters 24B alternately aligned in the vertical direction. As with the vertical signal line 50, the power supply line 56 formed along the vertical direction is provided in every column of the pixel pairs 25.

The first pixel readout line signal supply lines 57, the second pixel readout line signal supply lines 58, the reset lines 59, and the row selection lines 60 are formed along the horizontal direction. Each of the lines 57 to 60 is disposed between the first and second pixels 21 and 22 next to each other in the vertical direction. The single reset line 59 and the single row selection line 60 are provided in every row of the first and second pixels 21 and 22. The reset line 59 is positioned above the row of the first and second pixels 21 and 22, and the row selection line 60 is positioned below the row of the first and second pixels 21 and 22.

On the other hand, the first pixel readout line signal supply lines 57 and the second pixel readout line signal supply lines 58 are provided alternately every other row between the first and second pixels 21 and 22 next to each other in the vertical direction. The first and second pixels 21 and 22 of two rows next to each other in the vertical direction share the use of the same first pixel readout line signal supply line 57 and the same second pixel readout line signal supply line 58.

Specifically speaking, the second pixel readout line signal supply line 58 is disposed between a row A and a row B, and is used for readout from the second pixels 22 of the row A and the row B. In a like manner, the first pixel readout line signal supply line 57 is disposed between the row B and a row C, and is used for readout from the first pixels 21 of the row B and the row C. Thus, the first pixel readout line signal supply lines 57 are specific to readout of signals from the first pixels 21, and the second pixel readout line signal supply lines 58 are specific to readout of signals from the second pixels 22.

As described above, in the row A and the row C having the green color filters 24G, the first pixel readout line signal supply line 57 is positioned above, and the second pixel readout line signal supply line 58 is positioned below. In the row B and the row D having the alternately aligned red color filters 24R and blue color filters 24B, on the other hand, the first pixel readout line signal supply line 57 is positioned below, and the second pixel readout line signal supply line 58 is positioned above. Therefore, the structure of wiring and the like are different between the pixel pairs 25 having the green color filters 24G and the pixel pairs 25 having the alternately aligned red color filters 24R and blue color filters 24B.

Each of the lines 57 to 60 is connected to the image sensor driving section 15 through a control circuit (not shown) and the like. A signal is inputted to each of the lines 57 to 60 by the operation of the image sensor driving section 15.

The CDS circuit 53 is constituted of a clamp capacitor 70, a clamp transistor 71, a sample hold transistor 72, and a sample hold capacitor 73. The clamp capacitor 70 holds the signal voltage transmitted to the vertical signal line 50. The clamp transistor 71 outputs the power voltage VDD in response to an input of a clamp signal to its gate electrode. The sample hold transistor 72 reduces noise included in the signal voltage by calculating difference between the signal voltage obtained by exposure and a voltage (hereinafter called reset level voltage) outputted from the amplifier transistor 44 immediately after the reset. The sample hold capacitor 73 holds the signal voltage after the noise reduction.

The gate electrode of the clamp transistor 71 and a gate electrode of the sample hold transistor 72 are connected to the image sensor driving section 15 through the control circuit (not shown) and the like. By the operation of the image sensor driving section 15, a clamp signal for turning on the clamp transistor 71 and a sample hold signal for turning on the sample hold transistor 72 are inputted.

A source electrode of the column selection transistor 54 is connected to the sample hold capacitor 73, and a drain electrode of the column selection transistor 54 is connected to the horizontal signal line 51. A gate electrode of the column selection transistor 54 is connected to the image sensor driving section 15 through a control circuit (not shown) and the like. A column selection signal is inputted to the gate electrode of the column selection transistor 54 by the operation of the image sensor driving section 15, and the column selection transistor 54 is turned on. Turning on the column selection transistor 54 allows transfer of the signal voltage after the noise reduction that is held by the sample hold capacitor 73 of the vertical signal line 50 corresponding to the column selection transistor 54 to the horizontal signal line 51.

An input terminal of the output amplifier 55 is connected to the horizontal signal line 51, and an output terminal of the output amplifier 55 is connected to the image processing section 16. The output amplifier 55 produces the imaging signal in accordance with the signal voltage outputted from the horizontal signal line 51, and outputs the imaging signal to the image processing section 16.

In the first pixel 21, an anode of the PD 20 is grounded, and a cathode of the PD 20 is connected to a source electrode of the first pixel readout transistor 40. The PD 20 is reverse biased, and performs light accumulation in a depletion state under a transient state in which electrons being a carrier (signal charge) are temporarily discharged by the first pixel readout transistor 40. Thus, the PD 20 is in a state different from a stationary state in which a normal photodiode is used. The cathode of the PD 20 and the source of the first pixel readout transistor 40 are depleted, and are not in a so-called conductive state having low electron resistance.

The source electrode of the first pixel readout transistor 40 is connected to the cathode of the PD20, a drain electrode thereof is connected to the FD 42, and a gate electrode thereof is connected to the first pixel readout line signal supply line 57. Upon inputting the first pixel readout signal to the gate electrode of the first pixel readout transistor 40 through the first pixel readout signal supply line 57, the first pixel readout transistor 40 is turned on. Thus, the signal charge accumulated in the PD 20 of the first pixel 21 is transferred to and accumulated in the FD 42.

The PD 20 of the second pixel 22 and the second pixel readout transistor 41 have the same structure as the PD 20 of the first pixel 21 and the first pixel readout transistor 40, except for that a gate electrode of the second pixel readout transistor 41 is connected to the second pixel readout line signal supply line 58. The second pixel readout signal is inputted to the gate electrode of the second pixel readout transistor 41 through the second pixel readout line signal supply line 58. As a result, the second pixel readout transistor 41 is turned on, and signal charge accumulated in the PD 20 of the second pixel 22 is transferred to and accumulated in the FD 42.

A source electrode of the reset transistor 43 is connected to the FD 42, a drain electrode thereof is connected to the power supply line 56, and a gate electrode thereof is connected to the reset line 59. When the reset signal is inputted to the gate electrode of the reset transistor 43 and the reset transistor 43 is turned on, the electric potential of the FD 42 is reset to the power voltage VDD.

A drain electrode of the amplifier transistor 44 is connected to the power source line 56. A source electrode of the amplifier transistor 44 is connected to a drain electrode of the row selection transistor 45, and a gate electrode thereof is connected to the FD 42. The drain electrode of the row selection transistor 45 is connected to the source electrode of the amplifier transistor 44. A source electrode of the row selection transistor 45 is connected to the vertical signal line 50, and a gate electrode thereof is connected to the row selection line 60.

When the row selection signal is inputted to the gate electrode of the row selection transistor 45 and the row selection transistor 45 is turned on, the amplifier transistor 44 and the load transistor 52 compose the source follower circuit. In accordance with the signal charge of the FD 42 connected to the gate electrode of the amplifier transistor 44, a voltage appears as the signal voltage in the vertical signal line 50.

Next, a driving method of the CMOS image sensor 14 will be described. The CMOS image sensor 14 can be operated by five driving methods, that is, a high dynamic range still image mode, a left and right simultaneous exposure still image mode, a left and right pixels mixing still image mode, a 2D moving image mode, and a 3D moving image mode. The high dynamic range still image mode enables obtainment of a still image with a wide dynamic range by changing exposure time between the first pixel 21 and the second pixel 22. The left and right simultaneous exposure still image mode enables obtainment of a still image for phase difference AF or monocular 3D imaging by equalizing exposure time between the first pixel 21 and the second pixel 22. The left and right pixels mixing still image mode enables obtainment of an image having no phase difference information by mixing the signal charge of the first pixel 21 and the signal charge of the second pixel 22 in the FD 42. The 2D moving image mode enables obtainment of a 2D moving image. The 3D moving image mode enables obtainment of a 3D moving image.

A user can arbitrarily choose one of the driving modes by operation of the operation section 18. The control section 17 controls the operation of the image sensor driving section 15 in accordance with the driving mode chosen by the user. The image sensor driving section 15 inputs various types of signals to each of the lines 57 to 60, the clamp transistors 71, and the sample hold transistors 72 under the control of the image sensor driving section 15, to drive the CMOS image sensor 14 in the chosen driving mode. As described above, in this embodiment, the image sensor driving section 15 and the control section 17 compose a drive control section recited in claims. The control section 17 also controls the operation of the mechanical shutter 13 in accordance with the driving mode and makes the image processing section 16 carry out a process corresponding to the driving mode, so that the image processing section 16 produces image data in a format corresponding to the driving mode.

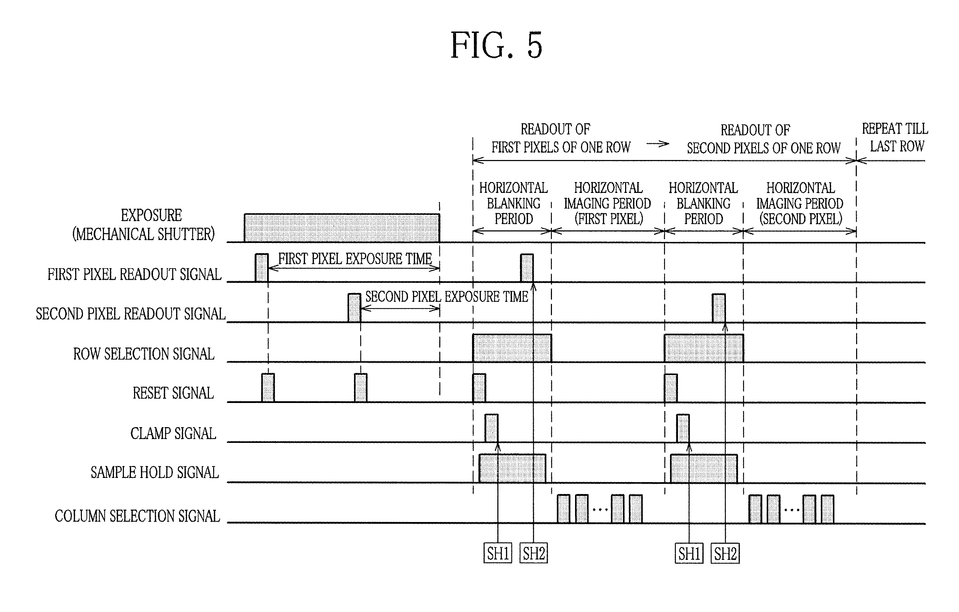

When the high dynamic range still image mode is chosen, the image sensor driving section 15 and the control section 17 drive the CMOS image sensor 14 based on a timing chart shown in Fig. 5. When photography is commanded in the high dynamic range still image mode, the control section 17 first controls the mechanical shutter 13 so as to shift a movable part of the mechanical shutter 13 from a closed position to an open position, to start exposing the imaging surface 14a of the CMOS image sensor 14. After that, the control section 17 controls the image sensor driving section 15 so as to drive the CMOS image sensor 14 in the high dynamic range still image mode.

In the high dynamic range still image mode, the image sensor driving section 15 inputs the first pixel readout signal to every first pixel readout line signal supply line 57 of the CMOS image sensor 14 and turns on every first pixel readout transistor 40, so the PD 20 of every first pixel 21 discharges unnecessary electric charge to the FD 42 and is depleted. As described above, the image sensor driving section 15 starts exposing each first pixel 21 in such a state that the PD 20 of each first pixel 21 is depleted.

After the input of the first pixel readout signal to every first pixel readout line signal supply line 57, the image sensor driving section 15 also inputs the reset signal to every reset line 59 and turns on every reset transistor 43, so the electric potential of every FD 42 is reset to the power voltage VDD.

The image sensor driving section 15 starts exposing each first pixel 21, and inputs the second pixel readout signal to every second pixel readout line signal supply line 58 after a lapse of a predetermined time, while keeping the movable part of the mechanical shutter 13 in the open position, in order to start exposing each second pixel 22, as with each first pixel 21. After the input of the second pixel readout signal to each second pixel readout line signal supply line 58, the image sensor driving section 15 inputs the reset signal again to every reset line 59 so as to reset the electric potential of each FD 42 to the power voltage VDD.

When a predetermined time has elapsed after the image sensor driving section 15 starts exposing each second pixel 22, the control section 17 controls the mechanical shutter 13. The movable part of the mechanical shutter 13 is shifted from the open position to the closed position to end the exposure of the imaging surface 14a of the CMOS image sensor 14. Thus, the exposure time of each first pixel 21 becomes longer than the exposure time of each second pixel 22, and the exposure amount of each first pixel 21 is larger than the exposure amount of each second pixel 22. As described above, the image sensor driving section 15 and the control section 17 vary the exposure time between the first pixel 21 and the second pixel 22 by inputting at different timings the first pixel readout signal to the first pixel readout line signal supply lines 57 and the second pixel readout signal to the second pixel readout line signal supply lines 58.

After the completion of the exposure, the image sensor driving section 15 starts reading out a signal of one screen from the first and second pixels 21 and 22. First, the image sensor driving section 15 inputs the row selection signal to the row selection line 60 of a first row (row A in Fig. 3) to turn on the row selection transistors 45 of the row A.

After the input of the row selection signal, the image sensor driving section 15 inputs the reset signal to the reset line 59 of the row A, so the reset level voltage is outputted from each amplifier transistor 44 of the row A. The reset level voltage is transferred to the corresponding vertical signal line 50 through the row selection transistor 45, and is held in the clamp capacitor 70 connected to the vertical signal line 50.

After the input of the reset signal, the image sensor driving section 15 inputs the sample hold signal to each sample hold transistor 72 to turn on each sample hold transistor 72. The sample hold transistor 72 is kept being turned on, until the reset level voltage is held in each corresponding sample hold capacitor 73. After that, the image sensor driving section 15 inputs the clamp signal to each clamp transistor 71 to turn on each clamp transistor 71. Thus, the reset level voltage outputted from each amplifier transistor 44 is held in each sample hold capacitor 73 of the corresponding column at a falling edge SH1 of the clamp signal.

After the reset level voltage is held, the image sensor driving section 15 inputs the first pixel readout signal to the first pixel readout line signal supply line 57 of the row A to turn on each first pixel readout transistor 40 of the row A. The signal charge accumulated in the PD 20 of each first pixel 21 of the row A is read out to the FD 42. The read signal charge is amplified by the amplifier transistor 44 and the load transistor 52, and is transferred as the signal voltage to the corresponding vertical signal line 50 through each row selection transistor 45. Thus, the signal voltage after the noise reduction, which is subtraction of the reset level voltage from the signal voltage, is held in each sample hold capacitor 73 at a falling edge SH2 of the clamp signal.

After the noise reduced signal voltage of each first pixel 21 of the row A is held in each sample hold capacitor 73, the image sensor driving section 15 stops inputting the sample hold signal to each sample hold transistor 72 to put each sample hold transistor 72 back to a turn-off state. Concurrently, the image sensor driving section 15 stops inputting the row selection signal to the row selection line 60 to put each row selection transistor 45 of the row A back to a turn-off state.

After the stop of the sample hold signal and the row selection signal, the image sensor driving section 15 then inputs the column selection signal in a predetermined procedure to the column selection transistor 54 of each corresponding vertical signal line 50. Therefore, the signal voltage held in each sample hold capacitor 73 is sequentially transferred to the horizontal signal line 51.

Since the vertical signal line 50 is provided in each column of the pixel pairs 25, every other column selection transistor 54 is turned on in transferring the signal voltage of one row. For example, in the case of transferring the signal voltage of the first pixels 21 of the row A, the column selection signal is inputted to the column selection transistor 54 of the vertical signal line 50 corresponding to the first and second columns. The next vertical signal line 50 corresponding to the second and third columns corresponds to the rows B, D, ... and hence is skipped, and subsequently the column selection signal is inputted to the column selection transistor 54 of the vertical signal line 50 corresponding to the third and fourth columns. In a like manner, the column selection signal is sequentially inputted to every other column selection transistor 54, e.g. the column selection transistor 54 corresponding to the fifth and sixth columns, the column selection transistor 54 corresponding to the seventh and eighth columns, ..., so that the signal voltage is transferred from every first pixel 21 of the row A.

The signal voltage transferred to the horizontal signal line 51 is amplified by the output amplifier 55, and is outputted to the image processing section 16 as the imaging signal. The readout of the signal from the first pixels 21 of the row A is completed as described above.

After the readout of the signals from the first pixels 21 of the row A is completed, the image sensor driving section 15 subsequently starts reading out a signal from each second pixel 22 of the row A. As in the case of the first pixels 21, the image sensor driving section 15 performs input of the row selection signal to the row selection line 60 of the row A, input of the reset signal to the reset line 59 of the row A, input of the sample hold signal to each sample hold transistor 72, and input of the clamp signal to each clamp transistor 71, so that the reset level voltage is held in each sample hold capacitor 73 of the corresponding row.

After the reset level voltage is held, the image sensor driving section 15 inputs the second pixel readout signal to the second pixel readout line signal supply line 58 of the row A, so that the signal voltage after the noise reduction, which is subtraction of the reset level voltage from the signal voltage of each second pixel 22, is held in each sample hold capacitor 73.

When the noise reduced signal voltage of each second pixel 22 of the row A is held in each sample hold capacitor 73, the image sensor driving section 15 stops inputting the sample hold signal to each sample hold transistor 72 and stops inputting the row selection signal to the row selection line 60, as in the case of the first pixels 21. Concurrently, the column selection signal is inputted to each corresponding column selection transistor 54, so that the signal voltage held in the sample hold capacitors 73 is sequentially transferred to the horizontal signal line 51. Note that, the vertical signal lines 50 are alternately selected in the case of the second pixels 22, similarly to the case of the first pixels 21.

As described above, the signal voltage of each second pixel 22 amplified by the output amplifier 55 is outputted as the imaging signal to the image processing section 16, and the readout of the signals from the first pixels 21 and the second pixels 22 of the first row is completed. After this, the image sensor driving section 15 repeats the above processing till the last row to read out the signals of one screen.

In the high dynamic range still image mode, the signals of the first pixels 21 of the row A are outputted in order of G1a, G3a, G5a, ..., and the signals of the second pixels 22 of the row A are outputted in order of G2a, G4a, G6a, .... Subsequently, the signals of the first pixels 21 of the row B are outputted in order of B0b, R2b, B4b, ..., and the signals of the second pixels 22 of the row B are outputted in order of B1b, R3b, B5b, .... Likewise, the signals are sequentially outputted in order of the row C, the row D, ..., to output the signals of one screen. Here, "G1a" or "B0b" identifies a pixel by an orderly combination of a color (R: red, G: green, B: blue) of the color filter 24, a number of the column, and an alphabetical character of the row.

When the photography is carried out in the high dynamic range still image mode and the imaging signals of one screen are outputted from the CMOS image sensor 14, the image processing section 16 produces high-sensitivity image data from the imaging signals of the first pixels 21 having the long exposure time. At the same time, low-sensitivity image data is produced from the imaging signals of the second pixels 22 having the short exposure time, and combining and optimizing the high-sensitivity and low-sensitivity image data produces still image data having a wide dynamic range.

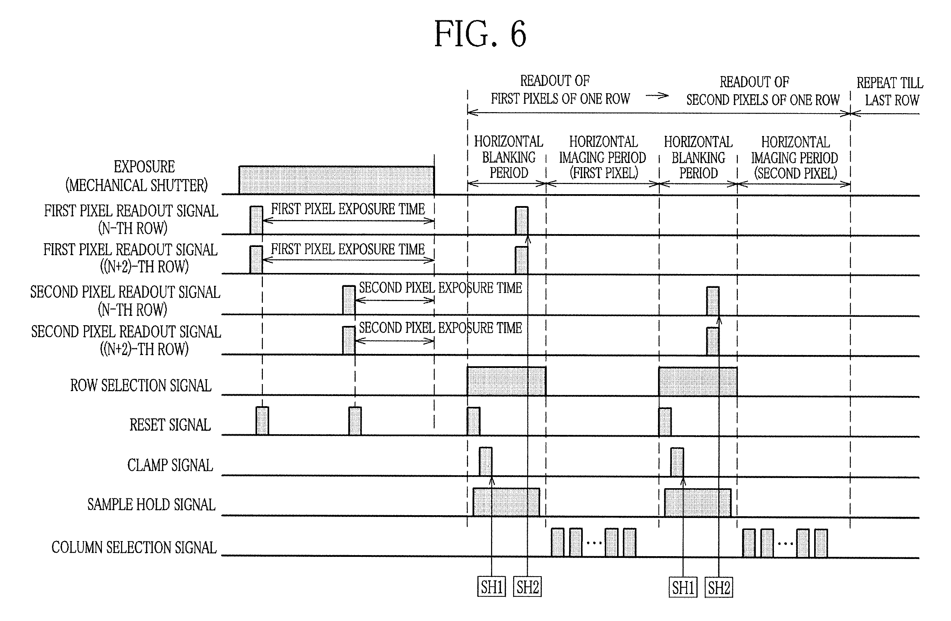

Also, in the CMOS image sensor 14, as shown in a timing chart of Fig. 6, when the signal charge after the exposure accumulated in the PD 20 is read out to the FD 42, the first pixel readout signal is inputted simultaneously to the N-th (N is an arbitrary row number from the first row to the last row) first pixel readout line signal supply line 57 and the (N+2)-th first pixel readout line signal supply line 57, so it is possible to mix the signal charge of the first pixels 21 of the pixel pairs 25 next to each other in the vertical direction in the vertical signal line 50. In a like manner, since the second pixel readout signal is inputted simultaneously to the N-th second pixel readout line signal supply line 58 and the (N+2)-th second pixel readout line signal supply line 58, the signal charge of the second pixels 22 of the pixel pairs 25 next to each other in the vertical direction can be mixed in the vertical signal line 50.

The mixture of the signal charge in the vertical direction is applied to the high dynamic range still image mode, and the readout of the signals from the first and second pixels 21 and 22 is carried out in order of G1a+G1c, G3a+G3c, G5a+G5c, ..., G2a+G2c, G4a+G4c, G6a+G6c, ..., B0b, R2b, B4b, ..., B1b, R3b, B5b, ..., R0d, B2d, R4d, ..., R1d, B3d, R5d, ..., and repeated sequentially. Note that, a "+" sign denotes the mixture of the signals.

As described above, in the pixel pairs 25 having the green color filter 24G next to each other in the vertical direction, the signals of the first pixels 21 are mixed and the signals of the second pixels 22 are mixed, so it is possible to shorten signal readout time. Also the sensitivity of a single signal amount of the first and second pixels 21 and 22 is doubled. Accordingly, an S/N ratio of the signals of the first and second pixels 21 and 22 is multiplied 2^{1/2} times, and noise reduction brings about further magnification in the dynamic range. Note that, the number of the pixels whose signals are mixed in the vertical signal line 50 is not limited to two, but can be arbitrarily settable.

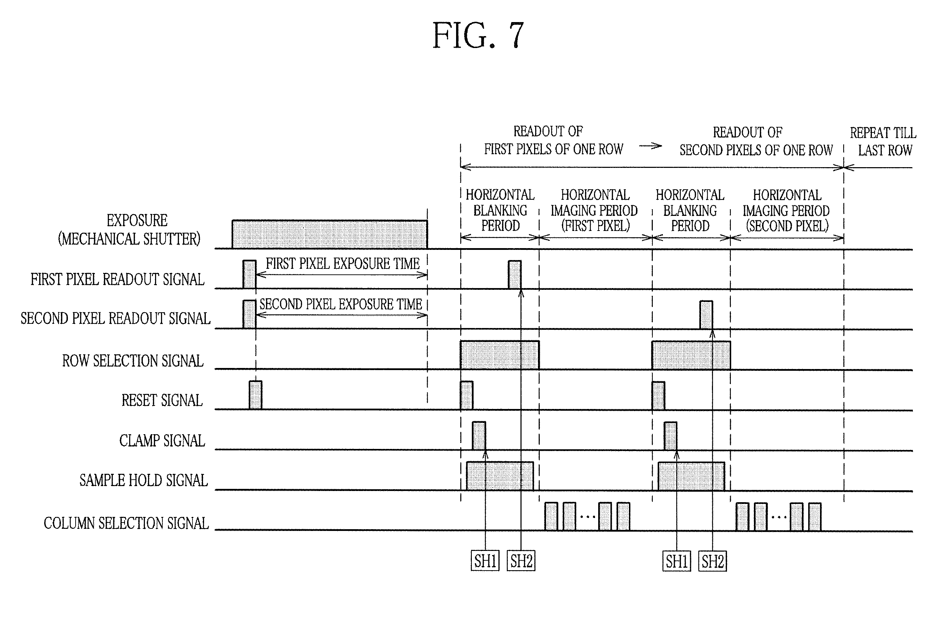

Next, when the left and right simultaneous exposure still image mode is chosen, the image sensor driving section 15 and the control section 17 drive the CMOS image sensor 14 based on a timing chart shown in Fig. 7. When photography is commanded in the left and right simultaneous exposure still image mode, the control section 17 first controls the mechanical shutter 13 so as to shift the movable part of the mechanical shutter 13 from the closed position to the open position, to start exposing the imaging surface 14a of the CMOS image sensor 14. After that, the control section 17 controls the image sensor driving section 15 so as to drive the CMOS image sensor 14.

The image sensor driving section 15 inputs the first pixel readout signal to all the first pixel readout line signal supply lines 57. Together and simultaneously with this, the second pixel readout signal is inputted to all the second pixel readout line signal supply lines 58, so that the FD 42 discharges unnecessary electric charge from the PDs 20 of the first and second pixels 21 and 22. As described above, the image sensor driving section 15 makes the PDs 20 of the first and second pixels 21 and 22 discharge the unnecessary electric charge, and makes the first and second pixels 21 and 22 start being exposed simultaneously by the elimination of the signal charge from each PD 20 and depletion thereof.

After starting the exposure of the first and second pixels 21 and 22, the image sensor driving section 15 inputs the reset signal to every reset line 59, to reset the electric potential of each FD 42 to the power voltage VDD.

In response to a lapse of a predetermined time after the image sensor driving section 15 starts exposing the first and second pixels 21 and 22, the control section 17 controls the mechanical shutter 13. The movable part of the mechanical shutter 13 is shifted from the open position to the closed position, and hence the exposure of the imaging surface 14a of the CMOS image sensor 14 is completed. Thus, the exposure time of the first pixel 21 becomes equal to the exposure time of the second pixel 22.

After the completion of the exposure, the image sensor driving section 15 reads out the signals of one screen from the first and second pixels 21 and 22 in the same procedure as in the high dynamic range still image mode. The output order of the signals from the first and second pixels 21 and 22 in the left and right simultaneous exposure still image mode is the same as that in the high dynamic range still image mode.

The imaging signals of the first and second pixels 21 and 22 obtained with the equal exposure time, as described above, are used for producing three-dimensional image data and calculating the focus adjustment amount of the taking lens 12. When the focus adjustment amount is calculated from the imaging signals, the control section 17 adjusts the focus of the taking lens 12 on the basis of the focus adjustment amount.

Driving the CMOS image sensor 14 as described above makes it possible to read out a whole of the signals of the first pixels 21 and a whole of the signals of the second pixels 22 alternately, in reading out the signals of the first and second pixels 21 and 22 of the single row. Thus, after reading out the signals of the first pixels 21 of the single row, a computation, for example, a smoothing (moving average) process or the like is carried out. By obtaining the difference between the processed signals of the first pixels 21 and the subsequently read out singles of the second pixels 22 of the single row, it is possible to produce phase difference information and hence to calculate the focus adjustment amount with high efficiency.

As in the case of the high dynamic range still image mode, it is possible to mix the signals of the first pixels 21 and mix the signals of the second pixels 22 in the pixel pairs 25 having the green color filter 24G next to each other in the vertical direction. This multiplies the S/N ratio of the signals of the first and second pixels 21 and 22 by 2^{1/2} times.

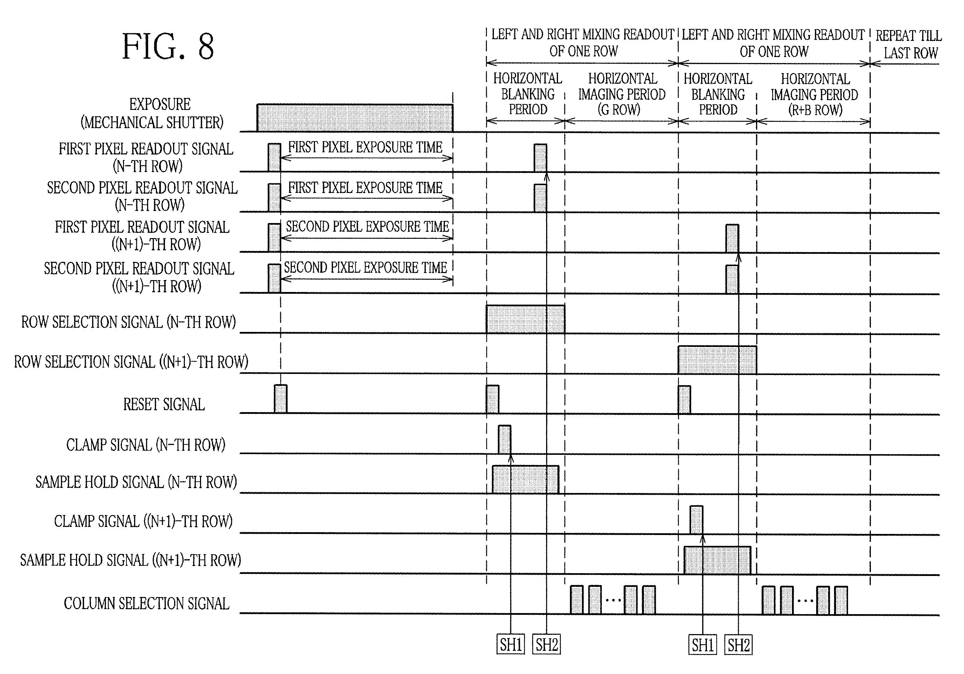

Next, when the left and right pixels mixing still image mode is chosen, the image sensor driving section 15 and the control section 17 drive the CMOS image sensor 14 based on a timing chart shown in Fig. 8. When photography is commanded in the left and right pixels mixing still image mode, the control section 17 first controls the mechanical shutter 13 so as to shift the movable part of the mechanical shutter 13 from the closed position to the open position, to start exposing the imaging surface 14a of the CMOS image sensor 14. After that, the control section 17 controls the image sensor driving section 15 so as to drive the CMOS image sensor 14.

The image sensor driving section 15 inputs the first pixel readout signal and the second pixel readout signal simultaneously to every first pixel readout line signal supply line 57 and every second pixel readout line signal supply line 58, respectively, to start exposure of the first and second pixels 21 and 22 at the same time. After that, the image sensor driving section 15 inputs the reset signal to every reset line 59, to reset the electric potential of each FD 42 to the power voltage VDD.

When a predetermined time has elapsed since the start of exposure of the first and second pixels 21 and 22, the control section 17 closes the mechanical shutter 17 to end the exposure of the imaging surface 14a of the CMOS image sensor 14.

After the completion of exposure, to start reading out the signals of one screen from the first and second pixels 21 and 22, the image sensor driving section 15 inputs the row selection signal to the row selection line 60 of the row A. After the input of the row selection signal, the image sensor driving section 15 inputs the reset signal to the reset line 59 of the row A, and inputs the sample hold signal to the sample hold transistors 72 of the columns (alternate columns) corresponding to the row A, and inputs the clamp signal to the clamp transistors 71 of the columns corresponding to the row A, so that each of the sample hold capacitors 73 of the columns corresponding to the row A holds the reset level voltage.

After the reset level voltage is held, the image sensor driving section 15 inputs the first pixel readout signal to the first pixel readout line signal supply line 57 of the row A, so that each of the first pixel readout transistors 40 of the row A is turned on. At the same time, the second pixel readout signal is inputted to the second pixel readout line signal supply line 58 of the row A, so that each of the second pixel readout transistors 41 of the row A is turned on.

Thus, the signal charge accumulated during the exposure in the PD 20 of each first pixel 21 is read out to the FD 42, and the signal charge accumulated during the exposure in the PD 20 of each second pixel 22 is also read out to the FD 42 at the same time. The signal charge of the first pixel 21 and the second pixels 22 that adjoin side by side is mixed in the FD 42.

The signal charge of the first and second pixels 21 and 22 mixed in the FD 42 is amplified by the amplifier transistor 44 and the load transistor 52, and is transmitted as the signal voltage to the corresponding vertical signal line 50 through the column selection transistor 45. The signal voltage after the noise reduction, which is obtained by subtraction of the reset level voltage from the signal voltage, is held in each sample hold capacitor 73. After that, the image sensor driving section 15 stops the input of the sample hold signal to each sample hold transistor 72, and then stops the input of the row selection signal to the row selection line 60.

Then, the image sensor driving section 15 inputs the column selection signal to the column selection transistor 54 of each of the corresponding vertical signal lines 50 in predetermined order, so that the signal voltage held in each of the sample hold capacitors 73 is sequentially transmitted to the horizontal signal line 51 and the readout of the signals from the first and second pixels 21 and 22 of the row A is completed. At this time, the vertical signal lines 50 are chosen alternately as in the case of the high dynamic range still image mode.

After the signals are read out from the first and second pixels 21 and 22 of the row A, the image sensor driving section 15 repeats the above process until the last row to read out the signals of one screen. Accordingly, in the left and right pixels mixing still image mode, the mixed signal of the first and second pixels 21 and 22 of the row A is outputted in order of G1a+G2a, G3a+G4a, G5a+G6a, ..., and then the mixed signal of the first and second pixels 21 and 22 of the row B is outputted in order of B0b+B1b, R2b+R3b, B4b+B5b, ..., and then the mixed signal of the first and second pixels 21 and 22 of the row C is outputted in order of G1c+G2c, G3c+G4c, G5c+G6c, .... Likewise, repeatedly reading out the signals from the row D, the row E, ..., results in output of the signals of one screen. Note that, a "+" sign denotes the mixture of the signals.

As described above, mixing the signal charge of the first pixel 21 and the second pixel 22 adjoining side by side in the FD 42 shortens readout time of the signals and increases an S/N ratio of the signals.

Also in the left and right pixels mixing still image mode, the first pixel readout signal is inputted simultaneously to the first pixel readout line signal supply lines 57 of the row N (N represents an arbitrary row number from the first to the last rows) and the row N+2, and the second pixel readout signal is inputted simultaneously to the second pixel readout line signal supply lines 58 of the rows N and N+2. This allows mixture of the signals of the first and second pixels 21 and 22 of the pixel pairs 25 having the green color filter 24G next to each other in the vertical direction. This facilitates accelerating the readout time and enhancing the effect of increase in the S/N ratio.

Note that, in the case of performing both the mixing of the signals of the first and second pixels 21 and 22 adjoining side by side and the mixing of the signals of the first and second pixels 21 and 22 next to each other in the vertical direction, the mixed signal of the first and second pixels 21 and 22 of the rows A and C is outputted in order of (G1a+G2a)+(G1c+G2c), (G3a+G4a)+(G3c+G4c), (G5a+G6a)+(G5c+G6c), .... Subsequently, the mixed signal of the first and second pixels 21 and 22 of the row B is outputted in order of B0b+B1b, R2b+R3b, B4b+B5b, .... Furthermore, the mixed signal of the first and second pixels 21 and 22 of the row D is outputted in order of R0d+R1d, B2d+B3d, R4d+R5d, .... Repeating similarly results in output of the signals of one screen.

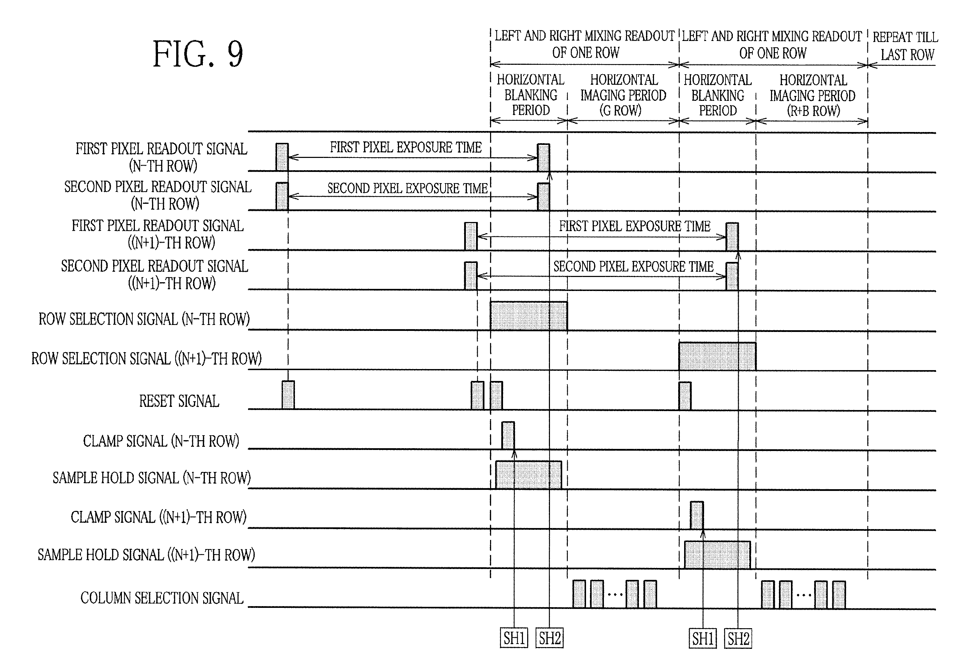

Next, when the 2D moving image mode is chosen, the image sensor driving section 15 and the control section 17 control the CMOS image sensor 14 based on a timing chart shown in Fig. 9. When the 2D moving image mode is chosen, the control section 17 controls the image sensor driving section 15 to drive the CMOS image sensor 14.

At the start, the image sensor driving section 15 simultaneously inputs the first pixel readout signal to the first pixel readout line signal supply line 57 of the row A and the second pixel readout signal to the second pixel readout line signal supply line 58 of the row A, to start exposing the first and second pixels 21 and 22 of the row A. After that, the image sensor driving section 15 inputs the reset signal to the reset line 59 of the row A, so the electric potential of each FD 42 of the row A is reset to the power voltage VDD.

The image sensor driving section 15 starts the exposure of the first and second pixels 21 and 22 of row A. When a predetermined time has elapsed, the first pixel readout signal and the second pixel readout signal are simultaneously inputted to the first pixel readout line signal supply line 57 and the second pixel readout line signal supply line 58 of the second row B, respectively, to start exposing the first and second pixels 21 and 22 of the row B. Also, as with above, the reset signal is inputted to the reset line 59 of the row B, so the electric potential of every FD 42 of the row B is reset to the power voltage VDD.

After starting the exposure of the first and second pixels 21 and 22 of the row B, the image sensor driving section 15 inputs the row selection signal to the row selection line 60 of the row A, to start reading out the signals from the first and second pixels 21 and 22 of the row A. After the input of the row selection signal, the image sensor driving section 15 performs input of the reset signal to the reset line 59 of the row A, input of the sample hold signal to the sample hold transistors 72 of the columns corresponding to the row A, and input of the clamp signal to the clamp transistors 71 of the columns corresponding to the row A. Thus, the reset level voltage of the row A is held in the sample hold capacitors 73 of the corresponding columns.

After that, the image sensor driving section 15 inputs the first pixel readout signal to the first pixel readout line signal supply line 57 of the row A, and turns on every first pixel readout transistor 40 of the row A. Concurrently with this, the second pixel readout signal is inputted to the second pixel readout line signal supply line 58 of the row A, so that every second pixel readout transistor 41 of the row A is turned on at the same time. Accordingly, the exposure time of the first and second pixels 21 and 22 of the row A is defined as time from the first input of the readout signal to the second input of the readout signal.

By simultaneously inputting the first pixel readout signal to the first pixel readout line signal supply line 57 and the second pixel readout signal to the second pixel readout line signal supply line 58, as in the case of the left and right pixels mixing still image mode, the signal charge of the first and second pixels 21 and 22 is read out at the same time to the FD 42 and mixed in the FD 42. The signal charge of the first and second pixels 21 and 22 mixed in the FD 42 is amplified by the amplifier transistor 44 and the load transistor 52. After that, the signal charge is transmitted as the signal voltage to the corresponding vertical signal line 50 through the row selection transistor 45, and the signal voltage after the noise reduction, which is subtraction of the reset level voltage from the signal voltage, is held in each sample hold capacitor 73.

After the noise-reduced signal voltage of the first and second pixels 21 and 22 of the row A is held in each sample hold capacitor 73, the image sensor driving section 15 stops the input of the sample hold signal to each sample hold transistor 72, and subsequently stops the input of the row selection signal to the row selection line 60.

After that, the image sensor driving section 15 inputs the column selection signal to the column selection transistors 54 of the corresponding vertical signal lines 50 in predetermined order, and the signal voltage held in the sample hold capacitors 73 is sequentially transmitted to the horizontal signal line 51, so the readout of the signals from the first and second pixels 21 and 22 of the row A is completed. At this time, as in the case of the high dynamic range still image mode, the vertical signal lines 50 are chosen alternately.

After that, the image sensor driving section 15 performs the readout of the signals from the first and second pixels 21 and 22 of the row B in a similar procedure. Repeating this process till the last row allows obtainment of the signals of one screen, and repeating the obtainment of the signals of one screen allows two-dimensional moving image data.

As described above, when the 2D moving image mode is chosen, the image sensor driving section 15 adjusts the exposure time of the first and second pixels 21 and 22 without using the mechanical shutter 13 and efficiently reads out the signals from the first and second pixels 21 and 22 of each row, by shifting the exposure timing (the input timing of the readout signal) of the first and second pixels 21 and 22 from row to row. Note that, as a matter of course, an input interval between the readout signals, in other words, the exposure time of the first and second pixels 21 and 22 is constant at every row.

Also, in the 2D moving image mode, simultaneously inputting the first pixel readout signal to the N-th and (N+2) -th first pixel readout line signal supply lines 57 and the second pixel readout signal to the N-th and (N+2) -th second pixel readout line signal supply lines 58 makes it possible to mix the signals of the first and second pixels 21 and 22 of the pixel pairs 25 having the green color filter 24G adjoining in the vertical direction.

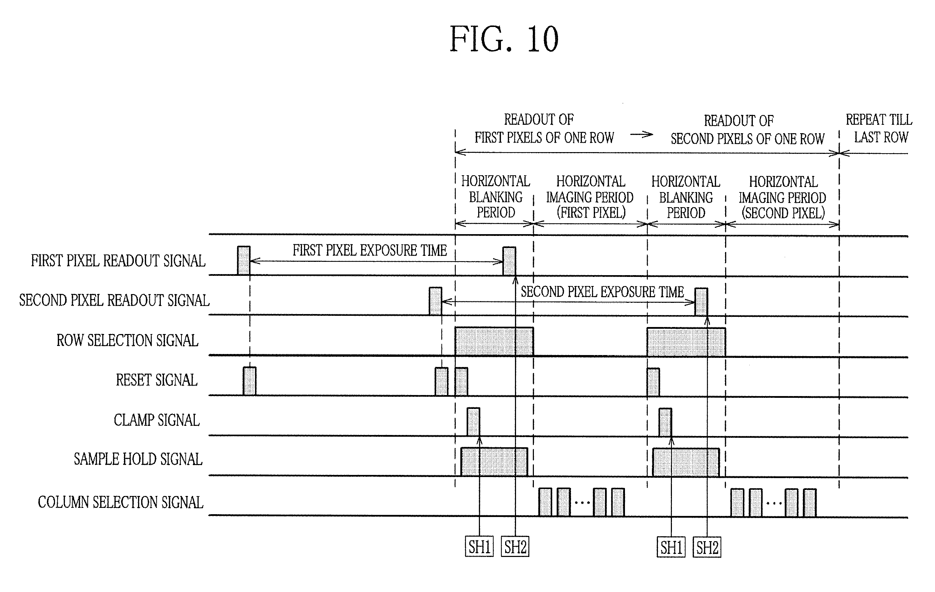

Next, when the 3D moving image mode is chosen, the image sensor driving section 15 and the control section 17 drive the CMOS image sensor 14 based on a timing chart shown in Fig. 10. When the 3D moving image mode is chosen, the control section 17 controls the image sensor driving section 15 to drive the CMOS image sensor 14.

First, the image sensor driving section 15 inputs the first pixel readout signal to the first pixel readout line signal supply line 57 of the row A to start exposing the first pixels 21 of the row A. After that, the image sensor driving section 15 inputs the reset signal to the reset line 59 of the row A, so the electric potential of each FD 42 of the row A is reset to the power voltage VDD.

In response to a lapse of a predetermined time after the start of exposure of the first pixels 21 of the row A, the image sensor driving section 15 inputs the second pixel readout signal to the second pixel readout line signal supply line 58 of the row A to start exposing the second pixels 22 of the row A. Also, as with above, the image sensor driving section 15 inputs the reset signal to the reset line 59 of the row A, so the electric potential of each FD 42 of the row A is reset to the power voltage VDD.

After that, the image sensor driving section 15 inputs the row selection signal to the row selection line 60 of the row A, and performs input of the reset signal to the reset line 59 of the row A, input of the sample hold signal to the sample hold transistors 72 of the columns corresponding to the row A, and input of the clamp signal to the clamp transistors 71 of the columns corresponding to the row A, so the reset level voltage of the row A is held in the sample hold capacitors 73 of the corresponding columns.

After that, the image sensor driving section 15 inputs the first pixel readout signal to the first pixel readout line signal supply line 57 of the row A, to turn on every first pixel readout transistor 40 of the row A. Thus, the exposure time of each first pixel 21 of the row A is defined as time from the first input of the first pixel readout signal to the second input of the first pixel readout signal.

By the input of the first pixel readout signal to the first pixel readout line signal supply line 57, the signal charge of each first pixel 21 is read out to the FD 42. The readout signal charge of each first pixel 21 is amplified by the amplifier transistor 44 and the load transistor 52 and is transmitted as the signal voltage to the corresponding vertical signal line 50 through the row selection transistor 45, so the signal voltage after the noise reduction, which is subtraction of the reset level voltage from the signal voltage, is held in each sample hold capacitor 73.

After that, the image sensor driving section 15 stops the input of the sample hold signal to each sample hold transistor 72, and subsequently stops the input of the row selection signal to the row selection line 60. Then, the image sensor driving section 15 inputs the column selection signal to the column selection transistors 54 of the corresponding vertical signal lines 50 in predetermined order, and the signal voltage held in the sample hold capacitors 73 is sequentially transmitted to the horizontal signal line 51, so the readout of the signal from each first pixel 21 of the row A is completed. At this time, as in the case of the high dynamic range still image mode, the vertical signal lines 50 are chosen alternately.

After that, the image sensor driving section 15 performs readout of the signal from each second pixel 22 of the row A in a similar procedure. Repeating this process till the last row allows obtainment of the signals of one screen, and the obtainment of the signals of one screen is further repeated. Therefore, an imaging signal for a moving image obtained by the first pixels 21 and an imaging signal for the moving image obtained by the second pixels 22 are obtained, and three-dimensional moving image data is produced from these imaging signals.

As described above, when the 3D moving image mode is chosen, the image sensor driving section 15 shifts the exposure timing (the input timing of the readout signal) of the first and second pixels 21 and 22 between the first pixels 21 and the second pixels 22. Thus, the exposure time of the first and second pixels 21 and 22 is adjusted without using the mechanical shutter 13 and the signals are efficiently and alternately read out from the first and second pixels 21 and 22. Note that, as a matter of course, an input interval between the readout signals, in other words, the exposure time of the first and second pixels 21 and 22 is constant at every row.

Although being omitted in Fig. 10, the exposure of each first pixel 21 of the row B is started during the readout
(horizontal imaging period of the drawing) of the signals from the first pixels 21 of the row A, in actual fact, and the transfer (horizontal blanking period of the drawing) of the signal from each first pixel 21 of the row B to the vertical signal line 50 is started immediately after the completion of the readout of the signals from the second pixels 22 of the row A.

Also, in the 3D moving image mode, the first pixel readout signal is inputted simultaneously to the N-th and (N+2) -th first pixel readout line signal supply lines 57. Together with this, the second pixel readout signal is inputted simultaneously to the N-th and (N+2)-th second pixel readout line signal supply lines 58. Thus, it is possible to mix the signals of the first pixels 21 of the pixel pairs 25 having the green color filter 24G adjoining in the vertical direction, and mix the signals of the second pixels 22 of the pixel pairs 25 having the green color filter 24G adjoining in the vertical direction.

As described above, the CMOS image sensor 14 can read out the signals obtained by the first and second pixels 21 and 22, being the phase difference detection pixels, appropriately to the outside. Also, in the CMOS image sensor 14, since the first and second pixels 21 and 22 share the FD 42, the reset transistor 43, the amplifier transistor 44, the row selection transistor 45, and the like, it is possible to mix the signals of the first and second pixels 21 disposed side by side and mix the signals of the first and second pixels 21 and 22 adjoining above and below, and hence carry out imaging in various modes.

### [Second Embodiment]

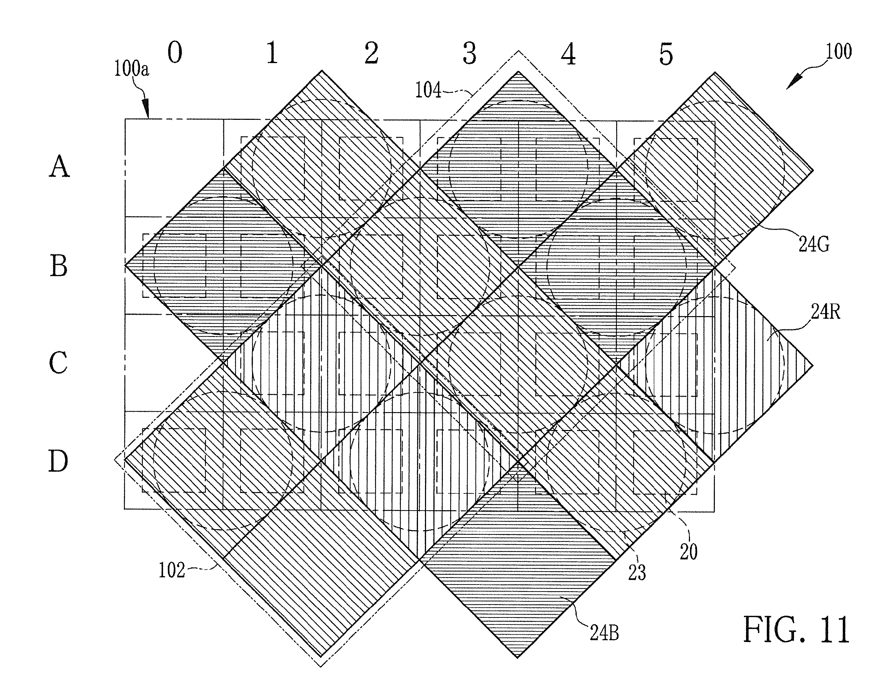

Next, a second embodiment of the present invention will be described. Note that, the same numbers refer to the same function and structure as those of the first embodiment, and detailed description thereof will be omitted. In Fig. 11, the color filters 24 of a CMOS image sensor 100 compose first filter sets 102 and second filter sets 104.

The first filter set 102 has two green color filters 24G arranged adjacently in the 45-degree diagonal direction and two red color filters 24R that adjoin to the green color filters 24G and are arranged adjacently each other in the 45-degree diagonal direction. In the second filter set 104, the blue color filter 24B substitutes for each red color filter 24R of the first filter set 102. The first and second filter sets 102 and 104 are arranged in a checkered pattern in an imaging surface 100a.

This arrangement of the color filters 24 is the same as an arrangement for use in so-called EXR in which pixels are arranged in a honeycomb pattern, and one of a pair of the pixels adjoining in the 45-degree diagonal direction is intended for high sensitivity and the other is intended for low sensitivity, and a pixel value of each of these pixels is mixed to obtain an image having a wide dynamic range.

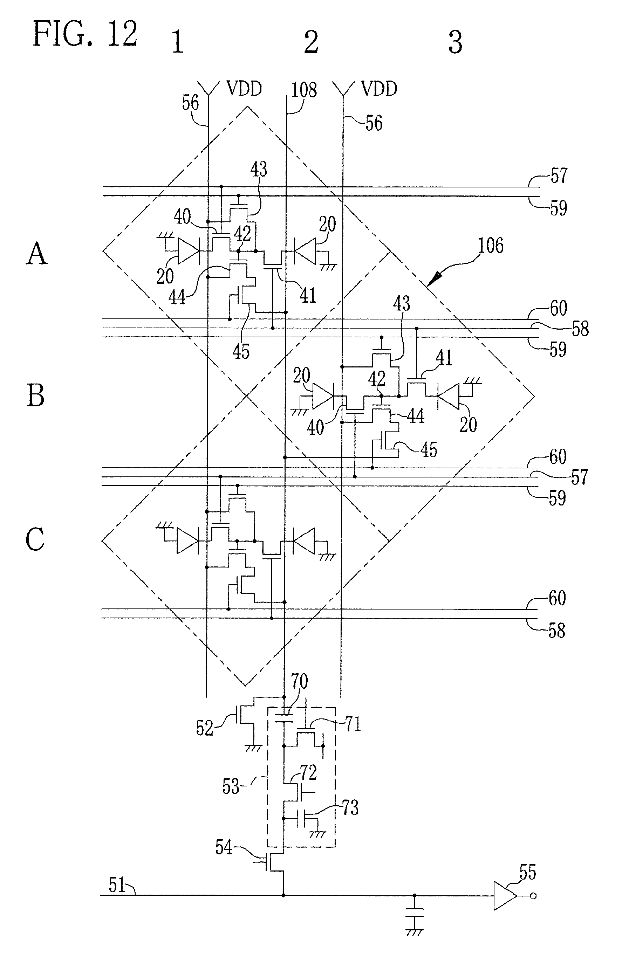

In Fig. 12, a pixel pair 106 of the CMOS image sensor 100 includes the PDs 20 of the first and second pixels 21 and 22, the first pixel readout transistor 40, the second pixel readout transistor 41, the FD 42, the reset transistor 43, the amplifier transistor 44, and the row selection transistor 45, as with the pixel pair 25 of the first embodiment.

In the CMOS image sensor 100, a single vertical signal line 108 is provided for every two columns of the pixel pairs 106 next to each other in the horizontal direction, though the single vertical signal line 50 is provided for every column of the pixel pairs 25 aligned in the vertical direction in the CMOS image sensor 14 of the first embodiment.

As described above, in the CMOS image sensor 100, the color filters 24 of the same color are arranged adjacently in the 45-degree diagonal direction. Thus, in the CMOS image sensor 100, output terminals of a pair of pixel pairs 106 having the color filters 24 of the same color (that is, a source electrode of the row selection transistor 45 of each of a pair of pixel pairs 106) are connected to the common vertical signal line 108. Thus, for example, it is possible to mix signals from the 45-degree adjoining pair of pixel pairs 106 having the color filters 24 of the same color.

Next, the operation method of the CMOS image sensor 100 will be described. Just as with the CMOS image sensor 14 of the first embodiment, the CMOS image sensor 100 has five driving modes, that is, the high dynamic range still image mode, the left and right simultaneous exposure still image mode, the left and right pixels mixing still image mode, the 2D moving image mode, and the 3D moving image mode.

When the high dynamic range still image mode is chosen, the image sensor driving section 15 and the control section 17 make each sample hold capacitor 73 hold the signal voltage of each first pixel 21 of the row A after the noise reduction, in a similar procedure to the first embodiment (refer to a flowchart of Fig. 5). After that, the image sensor driving section 15 inputs the column selection signals in predetermined order to the column selection transistors 54 of the corresponding vertical signal lines 108, so that the signal voltage held in the sample hold capacitors 73 is transferred to the horizontal signal line 51.

The single vertical signal line 108 is provided for every 45-degree diagonal adjoining pair of pixel pairs 106 having the color filters 24 of the same color. Accordingly, the single vertical signal line 108 is provided for every single pixel pair 106 aligned in the horizontal direction, i.e. every pixel pair 106 in every row. Also, the color filters 24 are arranged such that the color filters 24 of the same color adjoin each other in the 45-degree diagonal direction. Thus, viewed in the horizontal direction, the color filters 24 of different colors are arranged alternately, and hence there are rows having the alternately arranged green color filters 24G and red color filters 24R, and rows having the alternately arranged green color filters 24G and blue color filters 24B.

For this reason, in transferring the signal voltage of the first pixels 21 of the single row to the horizontal signal line 51, the image sensor driving section 15 selects every other vertical signal line 108, so that the signal voltage is sequentially transferred from the first pixels 21 of the pixel pairs 106 of one color included in the row to the horizontal signal line 51. After that, the skipped every other vertical signal lines 108 are selected to sequentially transfer the signal voltage of the first pixels 21 of the pixel pairs 106 of the other color included in the row to the horizontal signal line 51. The image sensor driving section 15 successively outputs the signal voltage corresponding to each of two colors included in the row by selecting the vertical signal lines 108 in an alternate manner as described above.

For example, in the case of transferring the signal voltage from each first pixel 21 of the row A, firstly, the column selection signal is inputted to the column selection transistor 54 of the vertical signal line 108 corresponding to the pixel pair 106 positioned across the first column and the second column. Since this pixel pair 106 is provided with the green color filter 24G, the signal voltage corresponding to green is transferred to the horizontal signal line 51.

The next pixel pair 106 positioned across the third column and the fourth column is skipped because this pixel pair 106 has the blue color filter 24B, and then the column selection signal is inputted to the column selection transistor 54 of the vertical signal line 108 corresponding to the pixel pair 106 positioned across the fifth column and the sixth column. By selecting the vertical signal lines 108 in this order, the green signal voltage included in the row A is sequentially transferred to the horizontal signal line 51.

After the transfer of the green signal voltage, the column selection signal is inputted to the skipped column selection transistor 54 of the vertical signal line 108 corresponding to the pixel pair 106 positioned across the third column and the fourth column, and repeating the input in an alternate manner allows sequential transfer of the signal voltage of blue color included in the row A. Accordingly, the signal voltage of two colors i.e. green and blue included in the row A is transferred successively to the horizontal signal line 51 on a color-by-color basis.

The signal voltage transferred to the horizontal signal line 51 is amplified by the output amplifier 55, and is outputted to the image processing section 16 as the imaging signal. Therefore, the signals are completely read out from the first pixels 21 of the row A.

After the completion of the readout of the signals from the first pixels 21 of the row A, the image sensor driving section 15 starts reading out the signals from the second pixels 22 of the row A. By repeating the readout till the last row, the signals of one screen are read out.

Accordingly, in the high dynamic range still image mode of the CMOS image sensor 100, the signals are outputted firstly from the green first pixels 21 of the row A in order of G1a, G5a, ..., and then from the blue first pixels 21 of the row A in order of B3a, B7a, ..., and then from the green second pixels 22 of the row A in order of G2a, G6a, ..., and then from the blue second pixels 22 of the row A in order of B4a, B8a, ....

Subsequently, the signals are outputted from the green first pixels 21 of the row B in order of G2b, G6b, ..., and then from the blue first pixels 21 of the row B in order of B0b, B4b, ..., and then from the green second pixels 22 of the row B in order of G3b, G7b, ..., and then from the blue second pixels 22 of the row B in order of B1b, B5b, ....

Then, the signals are outputted from the green first pixels 21 of the row C in order of G3c, G7c, ..., and then from the red first pixels 21 of the row C in order of R1c, R5c, ..., and then from the green second pixels 22 of the row C in order of G4c, G8c, ..., and then from the red second pixels 22 of the row C in order of R2c, R6c, .... Repeating the same procedure till the last row allows output of the signals of one screen.

Also, in the CMOS image sensor 100, when reading out the signal charge accumulated in the PD 20 to the FD 42 after the exposure, if the first pixel readout signal is inputted simultaneously to the N-th first pixel readout line signal supply line 57 and the (N+2)-th first pixel readout line signal supply line 57, the signal charge that is accumulated in each first pixel 21 of the pixel pairs 106 adjoining in the 45-degree diagonal direction is mixed in the vertical signal line 108. In a like manner, if the second pixel readout signal is inputted simultaneously to the N-th second pixel readout line signal supply line 58 and the (N+2) -th second pixel readout line signal supply line 58, the signal charge that is accumulated in each second pixel 22 of the pixel pairs 106 adjoining in the 45-degree diagonal direction is mixed in the vertical signal line 108.

When the mixture of the signal charge is applied to the high dynamic range still image mode, the signals are outputted from the green first pixels 21 of the rows A and B in order of G1a+G2b, G5a+G6b, ..., and then from the blue first pixels 21 of the rows A and B in order of B3a+B4b, B7a+B8b, ..., and then from the green second pixels 22 of the rows A and B in order of G2a+G3b, G6a+G7b, ..., and then from the blue second pixels 22 of the rows A and B in order of B4a+B5b, B8a+B9b, ....

Subsequently, the signals are outputted from the green first pixels 21 of the rows C and D in order of G3c+G4d, G7c+G8d, ..., and then from the red first pixels 21 of the rows C and D in order of R1c+R2d, R5c+R6d, ..., and then from the green second pixels 22 of the rows C and D in order of G4c+G5d, G8c+G9d, ..., and then from the red second pixels 22 of the rows C and D in order of R2c+R3d, R6c+R7d, .... Repeating the same procedure till the last row allows output of the signals of one screen, so it is possible to shorten the signal readout time and further expand the dynamic range, as with the first embodiment.

Next, when the left and right simultaneous exposure still image mode is chosen, the image sensor driving section 15 and the control section 17 make exposure of the first and second pixels 21 and 22 in the same procedure as in the first embodiment (see the timing chart of Fig. 7). After that, the image sensor driving section 15 reads out the signals of one screen from the first and second pixels 21 and 22 in the same procedure as in the high dynamic range still image mode described above. Thus, as in the case of the first embodiment, the CMOS image sensor 100 can obtain the imaging signal for use in producing the three-dimensional image data and calculating the focus adjustment amount.

Also, in the left and right simultaneous exposure still image mode, when reading out the signal charge accumulated in the PD 20 to the FD 42 after the exposure, if the first pixel readout signal is inputted simultaneously to the N-th first pixel readout line signal supply line 57 and the (N+2)-th first pixel readout line signal supply line 57, the signal charge that is accumulated in each first pixel 21 of the pixel pairs 106 adjoining in the 45-degree diagonal direction is mixed in the vertical signal line 108. In a like manner, if the second pixel readout signal is inputted simultaneously to the N-th second pixel readout line signal supply line 58 and the (N+2)-th second pixel readout line signal supply line 58, the signal charge that is accumulated in each second pixel 22 of the pixel pairs 106 adjoining in the 45-degree diagonal direction is mixed in the vertical signal line 108.

Next, when the left and right pixels mixing still image mode is chosen, the image sensor driving section 15 and the control section 17 make each sample hold capacitor 73 hold the noise reduced signal voltage (signal voltage mixed in FD 42) of the first and second pixels 21 and 22 of the row A in the same procedure as in the first embodiment (see the timing chart of Fig. 8). After that, the image sensor driving section 15 reads out the signal voltage of the first and second pixels 21 and 22 of the row A in the same procedure as in the high dynamic range still image mode described above, and repeating this procedure till the last row allows readout of the signals of one screen.

Accordingly, in the left and right pixels mixing still image mode of the CMOS image sensor 100, the mixed signals of the green first and second pixels 21 and 22 of the row A are outputted in order of G1a+G2a, G5a+G6a, ..., and then the mixed signals of the blue first and second pixels 21 and 22 of the row A are outputted in order of B3a+B4a, B7a+B8a, .... Subsequently, the mixed signals of the green first and second pixels 21 and 22 of the row B are outputted in order of G2b+G3b, G6b+G7b, ..., and then the mixed signals of the blue first and second pixels 21 and 22 of the row B are outputted in order of B0b+B1b, B4b+B5b, B8b+B9b, .... Subsequently, the mixed signals of the green first and second pixels 21 and 22 of the row C are outputted in order of G3c+G4c, G7c+G8c, ..., and then the mixed signals of the red first and second pixels 21 and 22 of the row C are outputted in order of R1c+R2c, R5c+R6c, .... By repeating the same procedure as for the row D, the row E, ..., the signals of one screen are outputted.

Also, in this left and right pixels mixing still image mode, the first and second pixel readout signals are inputted simultaneously to the N-th first pixel readout line signal supply line 57 and second pixel readout line signal supply line 58 and to the (N+2)-th first pixel readout line signal supply line 57 and second pixel readout line signal supply line 58, respectively. Thus, the signals of the first and second pixels 21 and 22 of the pixel pairs 106 adjoining in the 45-degree diagonal direction are mixed in the vertical signal line 108. In a like manner, if the second pixel readout signal is inputted simultaneously to the N-th second pixel readout line signal supply line 58 and the (N+2) -th second pixel readout line signal supply line 58, the signal charge that is accumulated in each second pixel 22 of the pixel pairs 106 adjoining in the 45-degree diagonal direction is mixed in the vertical signal line 108. This shortens the readout time and further enhances the effect of increase in the S/N ratio.

In this case, the mixed signals of the green first and second pixels 21 and 22 of the rows A and B are outputted in order of (G1a+G2a)+(G2b+G3b), (G5a+G6a)+(G6b+G7b), ..., and then the mixed signals of the blue first and second pixels 21 and 22 of the rows A and B are outputted in order of (B3a+B4a)+(B4b+B5b), (B7a+B8a) + (B8b+B9b), .... Subsequently, the mixed signals of the green first and second pixels 21 and 22 of the rows C and D are outputted in order of (G3c+G4c) +(G4d+G5d), (G7c+G8c) +(G8d+G9d), ..., and then the mixed signals of the red first and second pixels 21 and 22 of the rows C and D are outputted in order of (R1c+R2c) + (R2d+R3d), (R5c+R6c) +(R6d+R7d), .... By repeating the same procedure, the signals of one screen are outputted.

Note that, combination of the left and right pixels mixing still image mode and the high dynamic range still image mode allows actualizing a dynamic range mode of conventional EXR. Rows of long exposure time and rows of short exposure time are alternately set, such that, for example, the pixel pairs 106 of the row A have the long exposure time and the pixel pairs 106 of the row B have the short exposure time. Then, by adopting the readout procedure of the left and right pixels mixing still image mode described above, for example, a high-sensitivity signal is obtained from the pixel pair 106 of (G1a+G2a), and a low-sensitivity signal is obtained from the pixel pair 106 of (G2b+G3b), which adjoins the pixel pair 106 of (G1a+G2a) in the 45-degree diagonal direction. Therefore, since one of a pair of pixel pairs 106 adjoining in the 45-degree diagonal direction is intended for high sensitivity and the other is intended for low sensitivity, the dynamic range mode of the conventional EXR is actualized.

Next, when the 2D moving image mode is chosen, the image sensor driving section 15 and the control section 17 make each sample hold capacitor 73 hold the noise reduced signal voltage (signal voltage mixed in FD 42) of the first and second pixels 21 and 22 of the row A in the same procedure as in the first embodiment (see the timing chart of Fig. 9). After that, the image sensor driving section 15 reads out the signal voltage of the first and second pixels 21 and 22 of the row A in the same procedure as in the high dynamic range still image mode described above, and repeating this procedure till the last row allows readout of the signals of one screen. By sequentially repeating the obtainment of the signals of one screen, two-dimensional moving image data is obtained.

Also, in the 2D moving image mode, the first pixel readout signal and the second pixel readout signal are simultaneously inputted to the N-th and (N+1)-th first pixel readout line signal supply lines 57 and the N-th and (N+1)-th second pixel readout line signal supply lines 58, respectively. Therefore, it is possible to mix the signals of the first and second pixels 21 and 22 of each of the pixel pairs 106 adjoining in the 45-degreen diagonal direction in the vertical signal line 108.

Next, when the 3D moving image mode is chosen, the image sensor driving section 15 and the control section 17 make each sample hold capacitor 73 hold the noise reduced signal voltage of each first pixel 21 of the first row in the same procedure as in the first embodiment (see the timing chart of Fig. 10). After that, the image sensor driving section 15 reads out the signal voltage of each first pixel 21 of the first row in the same procedure as in the high dynamic range still image mode described above.

After the completion of reading out the signal from every first pixel 21 of the first row, the image sensor driving section 15 reads out the signal from each second pixel 22 of the first row in the same procedure. This procedure is repeated till the last row to obtain the signals of one screen, and the obtainment of the signals of one screen is further repeated. Thus, the imaging signal for the moving image obtained by each first pixel 21 and the imaging signal for the moving image obtained by each second pixel 22 are obtained, and the three-dimensional moving image data is produced.

Also, in the 3D moving image mode, when signal charge accumulated in the PD 20 is read out to the FD 42, the first pixel readout signal is inputted simultaneously to the N-th first pixel readout line signal supply line 57 and the (N+1)-th first pixel readout line signal supply line 57. Thus, it is possible to mix the signal charge of each first pixel 21 of the pixel pairs 106 adjoining in the 45-degree diagonal direction in the vertical signal line 108. In a like manner, since the second pixel readout signal is inputted simultaneously to the N-th second pixel readout line signal supply line 58 and the (N+1)-th second pixel readout line signal supply line 58, the signal charge of each second pixel 22 of the pixel pairs 106 adjoining in the 45-degree diagonal direction is mixed in the vertical signal line 108.

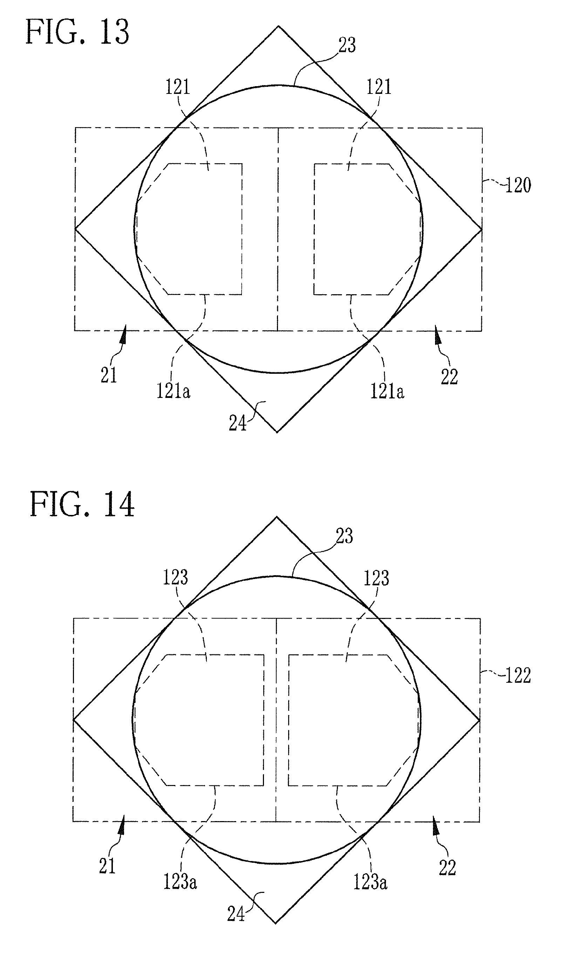

In each of the above embodiments, the opening area 20a of the light shielding film of the PD 20 of the first and second pixels 21 and 22 is formed approximately in shape of a rectangle. Thus, when viewed from a direction orthogonal to the imaging surface 14a, an end portion of the opening area 20a on a side opposite to the center of the microlens 23 extends out of an outline of the microlens 23, and both corners of the end portion lie in part of the color filters 24 of the adjoining pixel pairs 25. This structure may cause color mixture in a case where the color filter 24 of the adjoining pixel pair 25 has different color. Thus, it is preferable that the opening area of the light shielding film of the PD does not extend out of the outline of the microlens 23. For example, as shown in Fig. 13, an opening area 121a approximately in the shape of a hexagon in which the two corners of the rectangle are cut away is provided in the light shielding film of a PD 121 in a pixel pair 120.

Also, according to the structure of the opening area 121a, an exposure area is less than that of the structure of the opening area 20a of the PD 20, so the sensitivity of the first and second pixels 21 and 22 may be deteriorated. Thus, as shown in Fig. 14 having an opening area 123a in the shielding film of a PD 123 of a pixel pair 122, it is further preferable to bring an end portion of the opening area 123a as near as possible to the center of the microlens 23. An amount of light (illuminance) condensed by the microlens 23 is larger in a central portion. Therefore, bringing the opening area of the shielding film near to the center, just like the opening area 123a, can prevent deterioration in the sensitivity of the first and second pixels 21 and 22.

The shape of the opening area of the light shielding film of the PD is not limited to the hexagonal as described above, and may be arbitrary as long as the shape does not extend out of the outline of the microlens 23. Note that, properly speaking, the shape of the PD that contributes incidence of light is not the shape of a photoelectric converter of p-n junction formed in a semiconductor substrate, but the shape of an opening formed in a light shielding film that covers a surface of the semiconductor substrate.

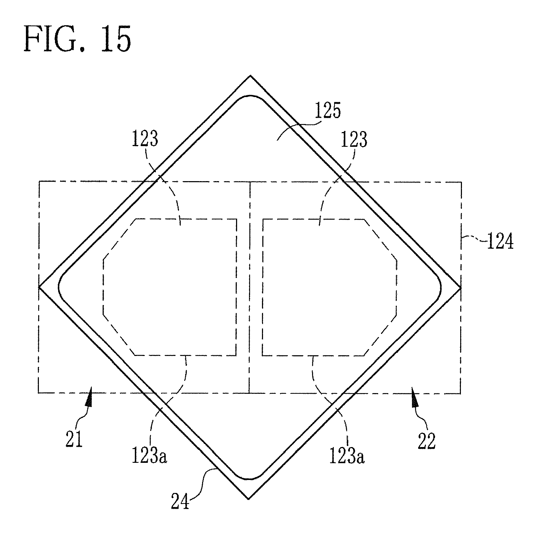

The microlens 23 of an approximately hemispherical shape is provided in each of the above embodiments, but not limited to this, as shown in Fig. 15, a microlens 125 of a convex curved shape having an approximately square outline may be provided in the pixel pair 124. The hemispherical lens is squared up into the microlens 125 in such a size as to enable arrangement of the pixel pairs 124, in other words, such that a bottom surface of the microlens 125 is almost in the shape of a square having a diagonal line of a length 2α. Thus, the microlens 125 has an area larger than the hemispherical lens, and hence the sensitivity of the first and second pixels 21 and 22 is increased. Accordingly, the microlens 125 is especially effective when the opening area 123a of the light shielding film of the PD 123 is formed so as not to extend out of an outline of the microlens 125.

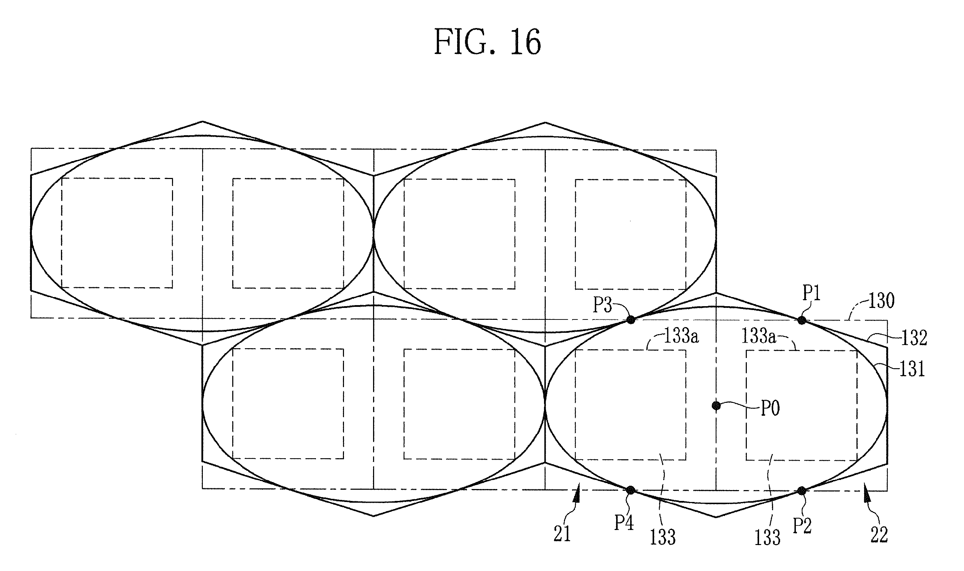

Also, as shown in Fig. 16, a semi-elliptical spherical microlens 131 may be provided in a pixel pair 130. A bottom surface of the microlens 131 is formed into the shape of an ellipse having a major axis of 2α and a minor axis of a little more than α. The microlens 131 is disposed such that its optical axis approximately coincides with the center of the pixel pair 130. Thus, a vertex portion of the microlens 131 on the side of the minor axis protrudes into space left between the microlens 131 itself and a pair of microlenses 131 adjoining in the vertical direction over or under the microlens 131.

A color filter 132 of the pixel pair 130 is formed approximately into the shape of a hexagon that circumscribes the bottom surface of the microlens 131 formed in an elliptical shape as described above. Forming the color filter 132 like this makes it possible to neatly arrange the color filters 132 in the imaging surface without leaving any space.

Here, when α represents the length of a side of the pixel and the center P0 of the pixel pair 130 is set as an origin point, the coordinates of nearest portions P1, P2, P3, and P4 to each microlens 131 next to each other in the vertical direction are P1=(α/2, α/2), P2=(α/2, -α/2), P3=(-α/2, α/2), and P4=(-α/2, -α/2). Each of these four points P1 to P4 is also a contact point between the microlens 131 and the color filter 132. Note that, each microlens 131 is in the shape of a hexagon having sharp vertexes in Fig. 16, but the vertexes (corners) are rounded in actual manufacture.

According to the hemispherical microlens 23 and the approximately rectangular color filter 24, relatively large margin areas, which extend out of the outline of the microlens 23, are formed in the four corners of the color filter 24, and there is apprehension that light incident obliquely upon these margin areas causes color mixture. On the contrary, according to the microlens 131 and the color filter 132 described above, since the color filter 132 is formed into the shape of a hexagon, which is nearer to a round, the size of the margin becomes small as compared with the structure of the microlens 23 and the color filter 24, and hence the occurrence of the color mixture is prevented.

Furthermore, the microlens 131 formed in the semi-elliptical spherical shape has a larger area overlapping the first and second pixels 21 and 22 than an area the microlens 23 formed in the hemispherical shape has. Accordingly, as shown in Fig. 16, even if an opening area 133a of the light shielding film of a PD 133 is formed into a rectangular shape in a conventional manner, the opening area 133a does not extend out of the microlens 131, so deterioration in the sensitivity of the first and second pixels 21 and 22 is prevented.

Also, the horizontally long microlens 131 and color filter 132 are suitable for obtainment of 3D and phase difference signals. Since the pixel pair 130 has an aspect ratio of 1:2, setting the ratio between the minor axis and the major axis of the microlens 131 at approximately 1:2 shortens a maximum length from an end of the opening area 133a to an end of the microlens 131. Thus, an angle of refraction at which light refracted by the microlens 131 is incident upon the opening area 133a is small and facilitates increase in sensitivity.

In each of the above embodiments, only the structure of pixels in the vicinity of an optical center in an imaging element light receiving area is described. An incident angle of a chief ray is more largely inclined with respect to the vertical direction with increase in distance from the optical center, so it is preferable to further use a so-called scaling method, which is a means for correcting the positional relation among the microlens, the color filter, and the opening area of the light shielding film of the PD. More specifically, the direction and the size of scaling apparently have effect on the decentering amount and the direction of the microlens described above, and the decentering amount and the direction of both or one of the microlens and the color filter may be corrected based on the direction and the size of scaling.

In each of the above embodiment, the CDS circuit 53 reduces the fixed pattern noise of each pixel, but not limited to this, the reduction of the fixed pattern noise may be performed by a column ADC (analog-to-digital converter) or the like.

Each of the above embodiments shows an example of application of the present invention to a general CMOS image sensor, but not limited to this, the present invention may be applied to another type of solid-state imaging element. Especially, a rear surface exposure type CMOS image sensor can have a large opening area, and can increase a displacement amount of an image with respect to focus or narrow a parallax angle by increasing the distance from the microlens 23 and the color filter 24 to the PDs 20 of the first and second pixels 21 and 22 with preventing deterioration in sensitivity. Therefore, applying the present invention to the rear surface exposure type CMOS image sensor is suitable for optimization of phase difference property.

In each of the above embodiments, the signals are sequentially read out from the first row (the row A) to the last row. However, in the case of reading out a part of an imaging screen, the signals are read out regarding a middle row of the imaging screen as the first row. In this sense, the first row and the last row do not have physical positional relation but have relative positional relation.

### DESCRIPTION OF THE REFERENCE NUMERALS

- 10: imaging device
- 14: CMOS image sensor
- 14a: imaging surface
- 15: image sensor driving section
- 17: control section
- 20: PD
- 21: first pixel
- 22: second pixel
- 23: microlens
- 24: color filter
- 25: pixel pair
- 26: pixel row
- 40: first pixel readout transistor
- 41: second pixel readout transistor
- 42: FD
- 43: reset transistor
- 44: amplifier transistor
- 45: row selection transistor
- 50: vertical signal line
- 51: horizontal signal line
- 54: column selection transistor
- 57: first pixel readout line signal supply line
- 58: second pixel readout line signal supply line
- 59: reset line
- 60: row selection line

## Claims

1. A solid-state imaging element **characterized in** comprising:
an imaging section including a plurality of pixel pairs each having first and second pixels disposed next to each other in a horizontal direction for converting incident light into electric charge for signal accumulation and a microlens for condensing light to said first and second pixels, said imaging section having an arrangement of a plurality of pixel rows each being composed of a plurality of said pixel pairs arranged in said horizontal direction, said pixel rows being arranged in a vertical direction such that said first pixel and said second pixel are next to each other in said vertical direction;
a first pixel readout section provided in each of said pixel pairs, for reading out signal charge accumulated in said first pixel;
a second pixel readout section provided in each of said pixel pairs, for reading out signal charge accumulated in said second pixel;
a plurality of first pixel readout line signal supply lines for supplying to each of said first pixel readout sections a first pixel readout signal for reading out said signal charge from said first pixel;
a plurality of second pixel readout line signal supply lines for supplying to each of said second pixel readout sections a second pixel readout signal for reading out said signal charge from said second pixel;
an electric charge accumulator provided in each of said pixel pairs, for temporarily accumulating said signal charge read out from said first pixel and said second pixel;
a reset section provided in each of said pixel pairs, for resetting said signal charge accumulated in said electric charge accumulator to predetermined electric potential;
a plurality of reset lines for supplying to each of said reset sections a reset signal for resetting said electric charge accumulator to said predetermined electric potential;
an amplifier provided in each of said pixel pairs, for amplifying said signal charge accumulated in said electric charge accumulator and outputting said signal charge as a signal voltage;
a row selection section provided in each of said pixel pairs, for selecting one or more of said pixel rows from which said signal voltage is to be transferred;
a plurality of row selection lines for supplying a row selection signal to each of said row selection sections;
a plurality of vertical signal lines formed along said vertical direction and provided every predetermined number of columns in said vertical direction, for transferring said signal voltage from said row selected by said row selection section in said vertical direction;
a horizontal signal line for transferring said signal voltage from each of said vertical signal lines in said horizontal direction; and
a column selection section provided so as to correspond to each of said vertical signal lines, for selecting one or more of said columns in which said signal voltage is to be transferred from each of said vertical signal lines to said horizontal signal line.

2. The solid-state imaging element as recited in claim 1, **characterized in that** said first pixel readout line signal supply lines and said second pixel readout line signal supply lines are alternately disposed in said vertical direction between said pixel rows adjoining in said vertical direction so as to be shared between two of said pixel rows adjoining in said vertical direction.

3. The solid-state imaging element as recited in claim 1, **characterized in that** said pixel pair has one color filter for transmitting only light of a predetermined color out of said light condensed by said microlens;
said color filter is one of a red color filter for transmitting red light, a green color filter for transmitting green light, and a blue color filter for transmitting blue light;
a filter set is constituted of two said green color filters disposed adjacently in said vertical direction and one said red color filter and one said blue color filter adjoining to said two green color filters and disposed adjacently in said horizontal direction; and
said filter sets are arranged adjacently each other in said horizontal direction and said vertical direction.

4. The solid-state imaging element as recited in claim 3, **characterized in that** each of said vertical signal lines is provided at every column of each of said pixel pairs arranged in said vertical direction.

5. The solid-state imaging element as recited in claim 1, **characterized in that** said pixel pair has one color filter for transmitting only light of a predetermined color out of said light condensed by said microlens;
said color filter is one of a red color filter for transmitting red light, a green color filter for transmitting green light, and a blue color filter for transmitting blue light;
a first filter set is constituted of two said green color filters disposed adjacently in a 45-degree diagonal direction and two said red color filters adjoining to each of said green color filters and disposed adjacently each other in said 45-degree diagonal direction;
a second filter set is constructed by substituting said blue color filter for each of said red color filters of said first filter set; and
said first and second filter sets are arranged in a checkered pattern.

6. The solid-state imaging element as recited in claim 5, **characterized in that** each one of said vertical signal lines is provided at every two columns of said pixel pairs, and outputs of a pair of said pixel pairs that adj oin in said 45-degree diagonal direction and have said color filters of a same color are connected to each of said vertical signal lines.

7. The solid-state imaging element as recited in claim 1, **characterized in that** an opening area of a light shielding film over a photoelectric converter is in such a shape as not to extend out of an outline of said microlens.

8. The solid-state imaging element as recited in claim 1, **characterized in that** said microlens has a semi-elliptical spherical shape having a maj or axis of substantially a same length as a width of said pixel pair in said horizontal direction, and an optical axis of said microlens substantially coincides with a center of said pixel pair.

9. The solid-state imaging element as recited in claim 8, **characterized in that** said pixel pair transmits only light of a predetermined color out of said light condensed by said microlens, and has a color filter of a substantially hexagonal shape circumscribing a bottom surface of said microlens.

10. A driving method of a solid-state imaging element including:
an imaging section including a plurality of pixel pairs each having first and second pixels disposed next to each other in a horizontal direction for converting incident light into electric charge for signal accumulation and a microlens for condensing light to said first and second pixels, said imaging section having an arrangement of a plurality of pixel rows each being composed of a plurality of said pixel pairs arranged in said horizontal direction, said pixel rows being arranged in a vertical direction such that said first pixel and said second pixel are next to each other in said vertical direction;
a first pixel readout section provided in each of said pixel pairs, for reading out signal charge accumulated in said first pixel;
a second pixel readout section provided in each of said pixel pairs, for reading out signal charge accumulated in said second pixel;
a plurality of first pixel readout line signal supply lines for supplying to each of said first pixel readout sections a first pixel readout signal for reading out said signal charge from said first pixel;
a plurality of second pixel readout line signal supply lines for supplying to each of said second pixel readout sections a second pixel readout signal for reading out said signal charge from said second pixel;
an electric charge accumulator provided in each of said pixel pairs, for temporarily accumulating said signal charge read out from said first pixel and said second pixel;
a reset section provided in each of said pixel pairs, for resetting said signal charge accumulated in said electric charge accumulator to predetermined electric potential;
a plurality of reset lines for supplying to each of said reset sections a reset signal for resetting said electric charge accumulator to said predetermined electric potential;
an amplifier provided in each of said pixel pairs, for amplifying said signal charge accumulated in said electric charge accumulator and outputting said signal charge as signal voltage;
a row selection section provided in each of said pixel pairs, for selecting one or more of said pixel rows from which said signal voltage is to be transferred;
a plurality of row selection lines for supplying a row selection signal to each of said row selection sections;
a plurality of vertical signal lines formed along said vertical direction and provided every predetermined number of columns in said vertical direction, for transferring said signal voltage from said row selected by said row selection section in said vertical direction;
a horizontal signal line for transferring said signal voltage from each of said vertical signal lines in said horizontal direction; and
a column selection section provided so as to correspond to each of said vertical signal lines, for selecting one or more of said columns in which said signal voltage is to be transferred from each of said vertical signal lines to said horizontal signal line,
said driving method **characterized in** comprising:
(A) a step of making an exposure of said imaging section;
(B) a step of reading out said signal voltage of said first and second pixels of an N-th row (N is an arbitrary integer), by inputting said row selection signal to said row selection line of said N-th row of said imaging section, inputting said first pixel readout signal to said first pixel readout line signal supply line of said N-th row of said imaging section, inputting said second pixel readout signal to said second pixel readout line signal supply line of said N-th row of said imaging section, and sequentially transferring said signal voltage corresponding to said N-th row read out to each of said vertical signal lines to said horizontal signal line; and
(C) a step of reading out said signal voltage of one screen by repeating said (A) step and said (B) step from a first row to a last row.

11. The driving method of said solid-state imaging element as recited in claim 10, **characterized in that** exposure time differs between said first pixel and said second pixel, by shifting input timing of said first pixel readout signal to said first pixel readout line signal supply line and input timing of said second pixel readout signal to said second pixel readout line signal supply line when making said exposure.

12. The driving method of said solid-state imaging element as recited in claim 10, **characterized in that** exposure time is substantially equalized between said first pixel and said second pixel, by simultaneously inputting said first pixel readout signal to said first pixel readout line signal supply line and said second pixel readout signal to said second pixel readout line signal supply line when making said exposure.

13. The driving method of said solid-state imaging element as recited in claim 10, **characterized in that** when performing readout of said N-th row, said signal charge after said exposure accumulated in each of said first pixels of said N-th row is read out by inputting said first pixel readout signal to said first pixel readout line signal supply line of said N-th row, and then said signal charge after said exposure accumulated in each of said second pixels of said N-th row is read out by inputting said second pixel readout signal to said second pixel readout line signal supply line of said N-th row.

14. The driving method of said solid-state imaging element as recited in claim 10, **characterized in that** when performing readout of said N-th row, said signal charge accumulated in said first pixel and said signal charge accumulated in said second pixel are simultaneously read out to said electric charge accumulator by simultaneously inputting said first pixel readout signal to said first pixel readout line signal supply line and said second pixel readout signal to said second pixel readout line signal supply line, to mix said signal charge in said electric charge accumulator.

15. The driving method of said solid-state imaging element as recited in claim 14, **characterized in that** said pixel pair has one color filter for transmitting only light of a predetermined color out of said light condensed by said microlens;
said color filter is one of a red color filter for transmitting red light, a green color filter for transmitting green light, and a blue color filter for transmitting blue light;
a first filter set is constituted of two said green color filters disposed adjacently in a 45-degree diagonal direction and two said red color filters adjoining to each of said green color filters and disposed adjacently each other in said 45-degree diagonal direction;
a second filter set is constructed by substituting said blue color filter for each of said red color filters of said first filter set;
said first and second filter sets are arranged in a checkered pattern; and
long exposure time and short exposure time are assigned alternately to every other pixel row in said vertical direction, and one of a pair of said pixel pairs adjoining in said 45-degree diagonal direction is intended for high sensitivity and the other is intended for low sensitivity by performing said mixture of said signal charge in said electric charge accumulator in readout of said one row.

16. The driving method of said solid-state imaging element as recited in claim 10, **characterized in that** when performing readout of said N-th row, said signal charge accumulated in each of said first pixels of a plurality of said pixel pairs adjoining in said vertical direction is mixed in said vertical signal line by inputting said first pixel readout signal simultaneously to said first pixel readout line signal supply lines of a plurality of rows including adjoining rows, and said signal charge accumulated in each of said second pixels of a plurality of said pixel pairs adjoining in said vertical direction is mixed in said vertical signal line by inputting said second pixel readout signal simultaneously to said second pixel readout line signal supply lines of a plurality of rows.

17. An imaging device **characterized in** comprising:
a solid-state imaging element including:
an imaging section including a plurality of pixel pairs each having first and second pixels disposed next to each other in a horizontal direction for converting incident light into electric charge for signal accumulation and a microlens for condensing light to said first and second pixels, said imaging section having an arrangement of a plurality of pixel rows each being composed of a plurality of said pixel pairs arranged in said horizontal direction, said pixel rows being arranged in a vertical direction such that said first pixel and said second pixel are next to each other in said vertical direction;
a first pixel readout section provided in each of said pixel pairs, for reading out signal charge accumulated in said first pixel;
a second pixel readout section provided in each of said pixel pairs, for reading out signal charge accumulated in said second pixel;
a plurality of first pixel readout line signal supply lines for supplying to each of said first pixel readout sections a first pixel readout signal for reading out said signal charge from said first pixel;
a plurality of second pixel readout line signal supply lines for supplying to each of said second pixel readout sections a second pixel readout signal for reading out said signal charge from said second pixel;
an electric charge accumulator provided in each of said pixel pairs, for temporarily accumulating said signal charge read out from said first pixel and said second pixel;
a reset section provided in each of said pixel pairs, for resetting said signal charge accumulated in said electric charge accumulator to predetermined electric potential;
a plurality of reset lines for supplying to each of said reset sections a reset signal for resetting said electric charge accumulator to said predetermined electric potential;
an amplifier provided in each of said pixel pairs, for amplifying said signal charge accumulated in said electric charge accumulator and outputting said signal charge as signal voltage;
a row selection section provided in each of said pixel pairs, for selecting one or more of said pixel rows from which said signal voltage is to be transferred;
a plurality of row selection lines for supplying a row selection signal to each of said row selection sections;
a plurality of vertical signal lines formed along said vertical direction and provided every predetermined number of columns in said vertical direction, for transferring said signal voltage from said row selected by said row selection section in said vertical direction;
a horizontal signal line for transferring said signal voltage from each of said vertical signal lines in said horizontal direction; and
a column selection section provided so as to correspond to each of said vertical signal lines, for selecting one or more of said columns in which said signal voltage is to be transferred from each of said vertical signal lines to said horizontal signal line; and
a drive control section for driving said solid-state imaging element.

18. The imaging device as recited in claim 17, **characterized in that** said drive control section has a first drive mode in which exposure time differs between said first pixel and said second pixel, by shifting input timing of said first pixel readout signal to said first pixel readout line signal supply line and input timing of said second pixel readout signal to said second pixel readout line signal supply line, when making an exposure of said imaging section.

19. The imaging device as recited in claim 17, **characterized in that** said drive control section has a second drive mode in which exposure time is substantially equalized between said first pixel and said second pixel, by simultaneously inputting said first pixel readout signal to said first pixel readout line signal supply line and said second pixel readout signal to said second pixel readout line signal supply line, when making an exposure of said imaging section.

20. The imaging device as recited in claim 17, **characterized in that** when reading out said signal voltage accumulated in said first and second pixels of an N-th row (N is an arbitrary integer),
said signal charge after an exposure accumulated in each of said first pixels of said N-th row is read out by inputting said first pixel readout signal to said first pixel readout line signal supply line of said N-th row, and then said signal charge after said exposure accumulated in each of said second pixels of said N-th row is read out by inputting said second pixel readout signal to said second pixel readout line signal supply line of said N-th row.

21. The imaging device as recited in claim 19, **characterized in that** said drive control section has a third drive mode in which when reading out said signal charge accumulated in said first and second pixels, said signal charge accumulated in said first pixel and said signal charge accumulated in said second pixel are simultaneously read out to said electric charge accumulator by simultaneously inputting said first pixel readout signal to said first pixel readout line signal supply line and said second pixel readout signal to said second pixel readout line signal supply line, in order to mix said signal charge in said electric charge accumulator.

22. The imaging device as recited in claim 21, **characterized in that** said pixel pair has one color filter for transmitting only light of a predetermined color out of said light condensed by said microlens;
said color filter is one of a red color filter for transmitting red light, a green color filter for transmitting green light, and a blue color filter for transmitting blue light;
a first filter set is constituted of two said green color filters disposed adjacently in a 45-degree diagonal direction and two said red color filters adjoining to each of said green color filters and disposed adjacently each other in said 45-degree diagonal direction;
a second filter set is constructed by substituting said blue color filter for each of said red color filters of said first filter set;
said first and second filter sets are arranged in a checkered pattern; and
said drive control section assigns long exposure time and short exposure time to every other pixel row alternately in said vertical direction, and one of a pair of said pixel pairs adj oining in said 45-degree diagonal direction is intended for high sensitivity and the other is intended for low sensitivity by adopting said mode of mixing said signal charge in said electric charge accumulator in readout of said one row.

23. The imaging device as recited in claim 17, **characterized in that** when reading out said signal charge accumulated in said first and second pixels, said drive control section mixes in said vertical signal line said signal charge accumulated in each of said first pixels of a plurality of said pixel pairs adjoining in said vertical direction by inputting said first pixel readout signal simultaneously to said first pixel readout line signal supply lines of a plurality of rows, and mixes in said vertical signal line said signal charge accumulated in each of said second pixels of a plurality of said pixel pairs adjoining in said vertical direction by inputting said second pixel readout signal simultaneously to said second pixel readout line signal supply lines of a plurality of rows.
